# EUROPÄISCHE PATENTSCHRIFT

(11) **EP 3 363 609 B1**
(45) Veröffentlichungstag und Bekanntmachung des Hinweises auf die Patenterteilung: **31.07.2019**
(21) Anmeldenummer: 18167105.8
(22) Anmeldetag: 23.03.2016
(51) Int. Cl.: B29B 7/40, B29B 7/42, B29B 7/72, B29B 7/74, C08G 63/78, C08G 64/02, C08G 69/04, B29B 7/84, B29B 7/86

(54) **ANLAGE SOWIE VERFAHREN ZUR BEHANDLUNG EINER KUNSTSTOFFSCHMELZE**
DEVICE AND METHOD FOR TREATMENT OF A POLYMER MELT
DISPOSITIF ET PROCÉDÉ DE TRAITEMENT D'UNE MATIÈRE PLASTIQUE FONDUE

(30) Priorität: 23.03.2015 AT 502322015; 23.03.2015 AT 502332015
(43) Veröffentlichungstag der Anmeldung: 22.08.2018
(62) Teilanmeldung aus: 16720987.3
(73) Patentinhaber: Next Generation Recyclingmaschinen GmbH, 4101 Feldkirchen an der Donau (AT)
(72) Erfinder: BEHOUN, Helmut, 4300 St. Valentin (AT); BRZEZOWSKY, Klaus, 4614 Marchtrenk (AT); HEHENBERGER, David, 4170 Haslach an der Mühl (AT); PICHLER, Bernhard, 4171 St. Peter am Wimberg (AT); PICHLER, Thomas, 4171 St. Peter am Wimberg (AT)
(74) Vertreter: Burger, Hannes

(56) Entgegenhaltungen:
- EP-B1- 1 833 597
- WO-A1-2014/040099
- DE-A1- 2 450 030
- US-A- 6 103 152

## Beschreibung

Die Erfindung betrifft eine Anlage sowie ein Verfahren zur Behandlung einer Kunststoffschmelze, insbesondere einer Polykondensatschmelze, und Einstellung von deren intrinsischen Viskosität.

Die WO 2014/040099 A1 der gleichen Anmelderin beschreibt ein Verfahren sowie eine Vorrichtung zum Erhöhen der Grenzviskosität einer Polykondensatschmelze unter Unterdruck. Die Schmelze tritt durch eine Lochplatte oder ein Sieb mit mehreren Öffnungen in eine Kammer ein, in der ein Druck kleiner 20 mbar herrscht und passiert diese Kammer im freien Fall in dünnen Fäden und verweilt unterhalb der Kammer für wenigstens eine Minute in einem Sammelbehälter. Im Sammelbehälter wird die Schmelze von einem in horizontaler Lage in Bezug auf einen Boden des Sammelbehälters ausgerichteten Misch- und Austragsteil unter Vakuum ständig bewegt, wobei das Misch und Austrageteil nicht vollständig von der Schmelze bedeckt wird. Oberhalb der Schmelze verbleibt ein freier Raum, wobei die Oberfläche der Schmelze durch eine Drehbewegung des Misch- und Austragsteils immer wieder aufgerissen und mehrmalig erneuert wird. Durch das Verweilen und in Bewegung halten der Schmelze wird die bei den dünnen Fäden begonnene Polykondensation im Schmelzebad fortgesetzt. Schließlich wird die Schmelze vom gemeinsam ausgebildeten Misch- und Austragsteil aus dem Sammelbehälter ausgetragen.

Die JP 2002/254432 A beschreibt einen Aufnahmetrichter zur Aufnahme von einem zu plastifizierenden Material, welches über eine mit einem Motor angetriebene Fördervorrichtung einer Plastifiziereinheit einer Spritzgussmaschine intermittierend zugefördert wird. Der Aufnahmetrichter mitsamt dem Motor und der Fördervorrichtung sind auf einer Wiegezelle abgestellt. Mittels der Wiegezelle kann das Gewicht des im Aufnahmetrichter aufgenommenen Materials ermittelt werden und damit bestimmt werden, ob ausreichend Material für die Weiterförderung an die Plastifiziereinheit der Spritzgussmaschine zur Verfügung steht. Weiters kann das Gewicht der Abgabemenge an Material bestimmt werden, welches an die Plastifiziereinheit der Spritzgussmaschine weiter gefördert wird. Dies ist jedoch nur möglich, solange während des Weiterförderns kein neues Material in den Aufnahmetrichter zugefördert wird. Durch Abstimmung des Gewichts der Zufuhrmenge an Material in den Aufnahmetrichter an das Gewicht der intermittierend abgegebenen Abfuhrmenge kann so ein in einer vorbestimmten Zeitdauer kontinuierlicher Materialdurchsatz ermittelt und festgelegt werden, welcher der nachfolgenden Spritzgusseinheit zugefördert wird. Nachteilig dabei ist, dass keine direkte Mengen- bzw. Massenkontrolle vom zugeführten Rohmaterial bis hin zu der vom Extruder abgegebenen Schmelze möglich ist.

Aus der JP 2011-131381 A ist eine ähnlich ausgebildete Anlage bekannt geworden, welche einen ersten Fülltrichter und einen an den Ausgabeabschnitt unterhalb angeordneten zweiten Fülltrichter umfasst. Der Ausgabeabschnitt des zweiten Fülltrichters mündet in einen Förderer ein. Der zweite Fülltrichter sowie der unterhalb angeordnete Förderer sind gemeinsam auf einer Wiegevorrichtung abgestützt. Damit kann eine Änderung des Gewichts des dem zweiten Fülltrichter zugeführten und abgeführten Rohmaterials ermittelt werden. Vom Förderer wird das Rohmaterial einem nachfolgend angeordneten Extruder zugeführt. Auch hier ist wiederum nachteilig, dass keine direkte Mengen- bzw. Massenkontrolle vom zugeführten Rohmaterial bis hin zu der vom Extruder abgegebenen Schmelze möglich ist.

Aus der EP 1 302 501 A2 ist ein Verfahren sowie eine Vorrichtung zum Fördern der Nachpolykondensation von Polymeren Produkten bekannt geworden. Die zuvor aufbereitete Schmelze wird durch eine Extrusionsplatte mit einer Vielzahl von Löchern hindurchgefördert, um der Schmelze eine Fadenform während des Hindurchtretens in vertikaler Richtung innerhalb einer Vakuumkammer zu geben. Unterhalb der Kammer ist ein Sammelbehälter angeordnet, in welchem aus den einzelnen Schmelzefäden ein Schmelzebad gebildet wird. Aus diesem Schmelzebad wird eine Teilmenge entnommen und der Zuleitung des aufgeschmolzenen Rohprodukts als bereits behandelte Schmelze in einem bestimmten Mengenverhältnis zugeführt. Dieses Gemisch zur Bildung der Schmelze aus dem Rohprodukt sowie dem zusätzlich zugeführten, bereits behandelten Schmelzeprodukt wird erneut durch die Extrusionsplatte mit einer Vielzahl von Löchern der Kammer mit dem reduzierten Druck zugeführt. Am unteren Ende des als Trichter ausgebildeten Sammelbehälters ist eine Ableitung hin zu einer Transferpumpe angeschlossen.

Die DE 2 243 024 A beschreibt eine Vorrichtung zur Herstellung von hochmolekularem PET. Die Vorrichtung besteht aus einem senkrecht angeordneten, zylinderförmigen Behälter mit einem Schmelzeeinlass an seinem oberen Ende und einem Schmelzeauslass am unteren Ende sowie Abzugsstutzen für flüchtige Stoffe. In der Mitte des Behälters ist eine Welle senkrecht angeordnet, um welche senkrechte, feststehende Stoffaustauschbleche angeordnet sind. Über den Stoffaustauschblechen ist jeweils ein Verteilerraum und unterhalb dieser ist ein Sammelraum vorhanden. Zwischen einem Verteilerraum und dem Sammelraum der darüber liegenden Stufe ist ein Verbindungsrohr angebracht, durch welches die Welle geführt ist. Die Welle ist an den durch das Verbindungsrohr ragenden Teilen jeweils als in den Verteilerraum fördernde Extruderwelle ausgebildet.

Die WO 2012/119165 A1 beschreibt sowohl ein Verfahren als auch eine Vorrichtung zum Entfernen von Verunreinigungen aus einer Kunststoffschmelze unter Unterdruck. Die Kunststoffschmelze wird dabei durch eine Lochplatte oder ein Sieb mit mehreren Öffnungen einer Kammer zugeführt, in der ein Druck kleiner 20 mbar herrscht. Die aus den Öffnungen austretende Schmelze bildet dabei dünne Fäden, die im freien Fall durch die Kammer hindurchtreten und unterhalb der Kammer in einem Sammelbehälter, welcher als Sammeltrichter ausgebildet ist, gesammelt wird und solange verweilt, bis dass die Schmelze an einem unteren Ende des Sammeltrichters durch eine Auslassöffnung aus dem Sammeltrichter abfließt bzw. entnommen wird. Erst an diese Auslassöffnung schließt eine Schmelzepumpe oder eine Förderschnecke an, mit der die Kunststoffschmelze zu einer Verbindungsleitung oder einer Sammelleitung gepumpt werden kann.

Der vorliegenden Erfindung liegt die Aufgabe zugrunde, konstante Behandlungsbedingungen im laufenden Behandlungsprozess für die Kunststoffschmelze zu schaffen, um eine gleichmäßige Werkstoffqualität der behandelten Kunststoffschmelze zu erhalten.

Diese Aufgabe der Erfindung wird durch eine Anlage gemäss Anspruch 1 zur Behandlung einer Kunststoffschmelze, insbesondere einer Polykondensatschmelze, und Einstellung von deren intrinsischen Viskosität kennzeichnend dadurch gelöst, dass die beiden horizontal angeordneten zweiten Reaktorgehäuseteile an ihren zweiten Endbereichen einander zugewendet angeordnet sind und an den zweiten Endbereichen miteinander zu einer Einheit verbunden sind, und dass die zumindest eine Auslassöffnung in einem Bodenbereich des zweiten Reaktorgehäuseteils angeordnet ist und dass sich das mindestens eine Mischelement jeweils über die Längserstreckung der zweiten Kammerteile zwischen den voneinander distanziert angeordneten ersten und zweiten Endbereichen der zweiten Reaktorgehäuseteile erstreckt und vollständig in jedem der zweiten Kammerteile angeordnet ist.

Der dadurch erzielte Vorteil liegt darin, dass durch das jeweilige zweifache Vorsehen von Reaktorgehäuseteilen eine größere Menge an Schmelze in einem zusammengehörigen Reaktor behandelt wird und dabei die Qualität der behandelten Schmelze noch verbessert wird. Durch die gleichzeitige Behandlung der Schmelze, beginnend jeweils in den beiden vertikal ausgerichteten ersten Reaktorgehäuseteilen und der nachfolgenden weiteren Behandlung in den zweiten Reaktorgehäuseteilen erfolgt so bei relativ geringem Platzbedarf und Anlagenaufwand eine rasche Behandlung der Schmelze und es wird dabei ein größerer Mengendurchsatz je Zeiteinheit erzielt. Weiters steht so innerhalb der zweiten Reaktorgehäuseteile die volle Länge für die Behandlung der Kunststoffschmelze durch das Mischelement zur Verfügung und es wird damit weiters ein gerichteter Entnahmebereich für die Schmelze aus den Reaktorgehäuseteilen geschaffen. So wird weiters verhindert, dass bei einem geringeren Füllstand sich der Schmelzespiegel in die Entnahmeöffnung hinein erstreckt und damit möglicherweise eine Unterbrechung der Entnahme von Kunststoffschmelze notwendig wird. Dies kann in weiterer Folge zu ungewollten Unterbrechungen des ansonsten kontinuierlichen Entnahmevorgangs führen. Weiters wird durch die vollständige Anordnung des Mischelements innerhalb des Kammerteils eine von der Entnahme unbeeinflusste ununterbrochene Behandlung der Schmelze durchgeführt. Damit erfolgt weiters eine noch gezieltere, intensivere Behandlung der Schmelze, wodurch eine noch bessere bzw. höhere intrinsische Viskosität erzielt wird. Damit werden die aus dem laufenden Behandlungsvorgang entstehenden bzw. abzuleitenden und nicht zur Schmelze gehörenden Bestandteile aus dem Reaktorinnenraum abgeführt. Weiters wird damit aber auch der Polykondensationsvorgang innerhalb der Schmelze begonnen und weiter fortgesetzt. Weiters wird aber auch ein sich über die gesamte Längserstreckung der zweiten Reaktorgehäuseteile erstreckender Behandlungsraum geschaffen, um so eine optimale Behandlung der Schmelze zu erzielen.

Weiters ist es vorteilhaft, wenn die ersten Reaktorgehäuseteile und/oder die zweiten Reaktorgehäuseteile rohrförmig ausgebildet sind. So kann eine definierte Längserstreckung und eine damit verbundene Behandlungsstrecke für die Schmelze ausgebildet werden. Ist weiters die Rotationsachse des Mischelements koaxial bezüglich des rohrförmig ausgebildeten zweiten Reaktorgehäuseteils angeordnet, kann damit insbesondere bei Rohren bzw. Rohrstücken mit einem kreisrunden Innenquerschnitt in Abhängigkeit von der äußeren Querschnittsabmessung des Mischelements eine zu starke Anlagerung von Schmelze verhindert werden.

Eine weitere mögliche Ausführungsform hat die Merkmale, dass das Mischelement in einem Minimalabstand von kleiner 1,0 mm von einer Innenwand des zweiten Reaktorgehäuseteils angeordnet ist. Damit kann nicht nur eine gute und ausreichende Mischwirkung sondern auch noch ein gewisser Abstreifeffekt an der Behälterinnenwand erzielt werden.

Weiters kann es vorteilhaft sein, wenn das Mischelement in einem Minimalabstand von größer 1,0 mm, insbesondere größer 20 mm, von der Innenwand des zweiten Reaktorgehäuseteils angeordnet ist. Durch die Vergrößerung des Spaltabstandes kann so ein gewisser Rückfluss an Schmelze während des Misch- und Behandlungsvorganges ermöglicht werden, wodurch eine noch bessere Behandlungswirkung durch die innere Umwälzung der Schmelze erreicht werden kann.

Eine weitere Ausbildung sieht vor, dass in jedem der zweiten Reaktorgehäuseteile ein unabhängiges Mischelement vorgesehen ist und jedes der Mischelemente mit einer eigenen, unabhängigen ersten Antriebsvorrichtung in Antriebsverbindung steht. So wird ein von der Austragsmenge unabhängiger Mischvorgang zur Erzielung der gewünschten intrinsischen Viskosität ermöglicht. Durch die Trennung des Antriebs von Mischelement und Austragsvorrichtung kann die Intensität sowie die Dauer des Mischvorgangs so lange durchgeführt werden, bis erst die Entnahme der Schmelze durchgeführt werden muss.

Eine weitere mögliche Ausführungsform hat die Merkmale, dass die in den beiden zweiten Reaktorgehäuseteilen angeordneten Mischelemente zu einem zusammengehörigen Bauteil miteinander verbunden sind und die Mischelemente eine gegenläufig ausgerichtete Steigung aufweisen. So kann das Mischelement mit einer einzigen ersten Antriebsvorrichtung angetrieben werden, wodurch Anlagenteile eingespart werden können. Durch die gegenläufige ausgerichtete Steigung wird bei gleichem Drehsinn des Mischelements trotzdem eine auf die in den einander zugewendeten zweiten Endbereichen angeordnete zumindest eine Auslassöffnung gerichtete Förderbewegung der Schmelze erzielt.

Eine weitere mögliche Ausführungsform hat die Merkmale, dass die zumindest eine Auslassöffnung im zweiten Reaktorgehäuseteil in einem Winkel von 30°, bevorzugt von 90°, unterhalb bezüglich einer durch eine Längsachse des zweiten Reaktorgehäuseteils verlaufenden Horizontalebene angeordnet ist.

Die erfindungsgemässe Anlage zeichnet sich dadurch aus, dass anschließend an die zumindest eine Auslassöffnung im zweiten Reaktorgehäuseteil eine Austragsvorrichtung für die Kunststoffschmelze angeordnet ist. Durch das Vorsehen einer eigenen Austragsvorrichtung kann so unabhängig vom Mischelement die Entnahme der behandelten Schmelze erfolgen. Durch diese Trennung können so die Intensität sowie die Dauer des Mischvorgangs unabhängig von der Entnahme so lange durchgeführt werden, bis die vorbestimmten Werte der zu behandelnden Schmelze erreicht worden sind.

Eine weitere bevorzugte Ausführungsform ist dadurch gekennzeichnet, dass die Austragsvorrichtung mit einer zweiten Antriebsvorrichtung in Antriebsverbindung steht, wobei die zweite Antriebsvorrichtung unabhängig von der oder den ersten Antriebsvorrichtungen des oder der Mischelemente angetrieben ist. Damit kann die Entnahmemenge bzw. das Entnahmegewicht an Schmelze aus dem Reaktor unabhängig vom durchzuführenden Misch- und Behandlungsvorgang festgelegt werden.

Weiters ist es vorteilhaft, wenn der Reaktor unter Zwischenschaltung zumindest einer Gewichtsermittlungsvorrichtung an einer Aufstandsfläche abgestützt ist. Der dadurch erzielte Vorteil liegt darin, dass so die Möglichkeit geschaffen wird, den Mengen- bzw. Gewichtshaushalt der Kunststoffschmelze während des laufenden Betriebs der Anlage in gewissen vorgegebenen Grenzen konstant halten zu können. Weiters kann damit aber auch die Qualität der Kunststoffschmelze und damit verbunden die intrinsische Viskosität in Abhängigkeit von der Entnahmemenge bzw. dem Entnahmegewicht eingestellt und relativ konstant beibehalten werden. So kann durch die laufende mögliche Überwachung des Gewichts stets ein ausgeglichenes Gleichgewicht an entnommenem Gewicht im Verhältnis zum zuzuführenden Gewicht an Kunststoffschmelze eingestellt werden. Damit kann aber auch das Niveau des Schmelzespiegels relativ konstant eingehalten werden, wodurch stets ein ausreichender Freiraum oberhalb des Schmelzespiegels verbleibt, und so die weitere Behandlung der Schmelze durch das Mischelement ungehindert auf die Schmelze einwirken kann.

Ist weiters die zumindest eine Gewichtsermittlungsvorrichtung durch eine Wiegezelle oder eine Zugwaage gebildet, steht die zumindest eine Gewichtsermittlungsvorrichtung mit einer Steuervorrichtung in Kommunikationsverbindung. Damit kann ein gesteuerter und/oder geregelter Behandlungsvorgang erzielt werden, um so den einzustellenden iV-Wert der Schmelze exakter einhalten zu können.

Die Aufgabe der Erfindung wird aber unabhängig davon auch durch ein Verfahren nach Anspruch 10 zur Behandlung einer Kunststoffschmelze, insbesondere einer Polykondensatschmelze, und Einstellung von deren intrinsischen Viskosität kennzeichnend dadurch gelöst:
- dass die beiden horizontal angeordneten zweiten Reaktorgehäuseteile an ihren zweiten Endbereichen einander zugewendet und an den zweiten Endbereichen miteinander zu einer Einheit verbunden werden, und
- dass die Entnahme der behandelten Kunststoffschmelze aus den zweiten Kammerteilen der beiden zweiten Reaktorgehäuseteile in einem Winkel von 30°, bevorzugt von 90°, bezüglich einer Längsachse der zweiten Reaktorgehäuseteile unterhalb des Schmelzespiegels durchgeführt wird, sodass der Schmelzespiegel eine annähernd gleiche Längserstreckung wie die Mischelemente aufweist und so auf den Schmelzespiegel des Schmelzebades während der Durchmischung des Schmelzebades der reduzierte Druck einwirkt.

Die aus der Merkmalskombination dieses Anspruches erzielten Vorteile liegen darin, dass so durch das Vorsehen von jeweils zwei ersten und zweiten Reaktorgehäuseteilen die Menge an zu behandelnder Schmelze je Zeiteinheit erhöht werden kann und dabei die Produktivität bei Einhaltung einer ausreichend guten Qualität der Schmelze am Ausgang aus dem Reaktor gesteigert werden kann. Damit kann in jedem der zweiten Reaktorgehäuseteile eine individuelle Behandlung der Schmelze durchgeführt werden, wobei im zentralen Mittelbereich auch noch eine Vermischung der beiden Schmelzen und damit eine noch feinere und genauere Einstellung der intrinsischen Viskosität der aus dem Reaktor entnommenen Schmelze möglich ist. Weiters steht so innerhalb der zweiten Reaktorgehäuseteile die volle Länge für die Behandlung der Kunststoffschmelze durch das Mischelement zur Verfügung und es kann damit ein gerichteter Entnahmebereich für die Schmelze aus den zweiten Reaktorgehäuseteilen geschaffen werden. So kann weiters verhindert werden, dass bei einem geringeren Füllstand sich der Schmelzespiegel in die Entnahmeöffnung hinein erstreckt und damit möglicherweise eine Unterbrechung der Entnahme von Kunststoffschmelze notwendig wird. Dies kann in weiterer Folge zu ungewollten Unterbrechungen des ansonsten kontinuierlichen Entnahmevorgangs führen. Weiters kann durch die vollständige Anordnung des Mischelements innerhalb der Kammerteile eine von der Entnahme unbeeinflusste ununterbrochene Behandlung der Schmelze durchgeführt werden. Damit kann weiters eine noch gezieltere, intensivere Behandlung der Schmelze erfolgen, wodurch eine noch bessere bzw. höhere intrinsische Viskosität erzielbar ist.

Eine weitere vorteilhafte Vorgehensweise ist dadurch gekennzeichnet, dass in jedem der zweiten Reaktorgehäuseteile ein unabhängiges Mischelement vorgesehen wird und jedes der Mischelemente von einer eigenen, unabhängigen ersten Antriebsvorrichtung angetrieben wird. So wird ein von der Austragsmenge unabhängiger Mischvorgang zur Erzielung der gewünschten intrinsischen Viskosität ermöglicht. Durch die Trennung des Antriebs von Mischelement und Austragsvorrichtung kann die Intensität sowie die Dauer des Mischvorgangs so lange durchgeführt werden, bis erst die Entnahme der Schmelze durchgeführt werden muss.

Weiters ist ein Vorgehen vorteilhaft, bei dem die in den beiden zweiten Reaktorgehäuseteilen angeordneten Mischelemente zu einem zusammengehörigen Bauteil miteinander verbunden werden und die Mischelemente mit einer gegenläufig ausgerichteten Steigung ausgebildet werden. So kann das Mischelement mit einer einzigen ersten Antriebsvorrichtung angetrieben werden, wodurch Anlagenteile eingespart werden können.

Vorteilhaft ist auch eine Verfahrensvariante, bei welcher die Kunststoffschmelze in jedem der zweiten Kammerteile der zweiten Reaktorgehäuseteile vom Mischelement ständig bewegt und durchmischt wird. Damit wird der im ersten Reaktorteil begonnene Behandlungsvorgang, insbesondere die Polykondensation, weiter fortgesetzt und so die intrinsische Viskosität weiter erhöht.

Eine andere Vorgehensweise zeichnet sich dadurch aus, wenn eine anschließend an die im zweiten Reaktorgehäuseteil angeordnete Auslassöffnung angeordnete Austragsvorrichtung von einer zweiten Antriebsvorrichtung angetrieben wird, wobei die zweite Antriebsvorrichtung unabhängig von der oder den ersten Antriebsvorrichtungen des oder der Mischelemente angetrieben wird. Damit kann die Entnahmemenge bzw. das Entnahmegewicht an Schmelze aus dem Reaktor unabhängig vom durchzuführenden Misch- und Behandlungsvorgang festgelegt werden.

Weiters ist ein Vorgehen vorteilhaft, bei dem zuerst von zumindest einer Gewichtsermittlungsvorrichtung ein erster Messwert vom Eigengewicht des Reaktors ohne der Kunststoffschmelze ermittelt und an eine Steuervorrichtung übertragen und gegebenenfalls in dieser abgespeichert wird, anschließend die zu behandelnde Kunststoffschmelze dem Reaktor zugeführt und bei Erreichen eines vordefinierten Füllstandes der Kunststoffschmelze und der damit verbundenen Höhe des Schmelzespiegels in den zweiten Kammerteilen der zweiten Reaktorgehäuseteile ein zweiter Messwert von der zumindest einen Gewichtsermittlungsvorrichtung ermittelt und an die Steuervorrichtung übertragen und gegebenenfalls in dieser abgespeichert wird, dann von der Steuervorrichtung ein Differenzwert aus dem zweiten Messwert abzüglich des ersten Messwerts ermittelt wird und dass von der Steuervorrichtung in Abhängigkeit des aus den zweiten Reaktorgehäuseteilen entnommenen Gewichts an behandelter Kunststoffschmelze das Gewicht an zugeführter, zu behandelnder Kunststoffschmelze in vorgegebenen Grenzen im Gleichgewicht bezüglich des zuvor ermittelten Differenzwertes gehalten wird. Die daraus erzielten Vorteile liegen darin, dass so die Möglichkeit geschaffen wird, den Mengen- bzw. Gewichtshaushalt der Kunststoffschmelze während des laufenden Betriebs der Anlage in gewissen vorgegebenen Grenzen konstant halten zu können. Weiters kann damit aber auch die Qualität der Kunststoffschmelze und damit verbunden die intrinsische Viskosität in Abhängigkeit von der Entnahmemenge bzw. dem Entnahmegewicht eingestellt und relativ konstant beibehalten werden. So kann durch die laufende mögliche Überwachung des Gewichts stets ein ausgeglichenes Gleichgewicht an entnommenem Gewicht im Verhältnis zum zuzuführenden Gewicht an Kunststoffschmelze eingestellt werden. Damit kann aber auch das Niveau des Schmelzespiegels relativ konstant eingehalten werden, wodurch stets ein ausreichender Freiraum oberhalb des Schmelzespiegels verbleibt, und so die weitere Behandlung der Schmelze durch das Mischelement ungehindert auf die Schmelze einwirken kann.

Vorteilhaft ist auch eine Verfahrensvariante, bei welcher von einer Messvorrichtung ein Messwert der intrinsischen Viskosität der behandelten Kunststoffschmelze im Bereich der Auslassöffnung oder einem unmittelbar daran anschließenden Austragsabschnitt der Kunststoffschmelze ermittelt wird. Damit kann im laufenden Behandlungsprozess stets eine unmittelbare Ermittlung der intrinsischen Viskosität erfolgen und so rasch auf den durchzuführenden Behandlungsvorgang eingewirkt werden, sodass kein oder nur eine geringe Menge Ausschussmaterial anfällt.

Eine weitere vorteilhafte Vorgehensweise ist dadurch gekennzeichnet, dass auch die Austragsvorrichtung unter Zwischenschaltung zumindest einer Gewichtsermittlungsvorrichtung an der Aufstandsfläche abgestützt wird. Durch die eigene Abstützung kann so aber auch jener Gewichtsanteil an Schmelze ermittelt werden, welcher sich noch im Bereich der Anlage befindet. Damit kann so ein noch besser abgestimmtes Behandlungsergebnis für die Schmelze erzielt werden.

Eine andere Vorgehensweise zeichnet sich dadurch aus, wenn der Schmelzespiegel der Kunststoffschmelze beim vordefinierten Füllstand in den zweiten Kammerteilen der zweiten Reaktorgehäuseteile in etwa in halber Höhe der zweiten Kammerteile liegt. Dadurch können in dem oberhalb des Schmelzespiegels verbleibenden Freiraum ein Aufreißen des Schmelzespiegels sowie dessen ständige Erneuerung erfolgen. Bei einem im Reaktorinnenraum herrschenden Unterdruck kann so aber auch dieser voll zur Wirkung auf die Schmelze gebracht werden.

Eine andere Ausführungsform zeichnet sich dadurch aus, dass die Anlage weiters ein Traggerüst umfasst und zumindest der Reaktor, insbesondere dessen Reaktorgehäuse, an dem Traggerüst gehalten ist. Dadurch kann eine gerichtete Abstützung und weiters exakt vordefinierte Abstützpunkte geschaffen werden.

Eine weitere mögliche Ausführungsform hat die Merkmale, dass das Traggerüst mitsamt dem daran gehaltenen Reaktor über mehrere der Gewichtsermittlungsvorrichtungen an der Aufstandsfläche abgestützt ist. So kann eine exakte Ermittlung des Gesamtgewichts erzielt werden.

Eine weitere Ausbildung sieht vor, dass die zumindest eine Gewichtsermittlungsvorrichtung bodennah bezüglich der Aufstandsfläche angeordnet ist.

Eine andere Ausführungsform zeichnet sich dadurch aus, dass die zumindest eine Gewichtsermittlungsvorrichtung an ihrer vom Reaktor oder vom Traggerüst abgewendeten und der Aufstandsfläche zugewendeten Seite an einem Grundrahmen abgestützt ist und der Grundrahmen über Räder an der Aufstandsfläche abgestützt ist. Damit kann einfach der Aufstellungsort des Reaktors verlagert werden. Darüber hinaus kann so aber auch eine individuelle Ausrichtung des Reaktors samt Traggerüst zu anderen Anlagenkomponenten erfolgen.

Eine weitere bevorzugte Ausführungsform ist dadurch gekennzeichnet, dass zumindest der Reaktor, insbesondere dessen Reaktorgehäuse, am Traggerüst über die zumindest eine Gewichtsermittlungsvorrichtung in einer hängenden Position am Traggerüst gehalten ist. So kann ebenfalls eine Gewichtsermittlung in allen Betriebszuständen einfach und sicher durchgeführt werden. Weiters können damit aber mögliche Schwingungen oder andere Störeinflüsse besser abgefangen und kompensiert werden.

Eine andere Ausführungsform zeichnet sich dadurch aus, dass auch die Austragsvorrichtung unter Zwischenschaltung zumindest einer Gewichtsermittlungsvorrichtung an der Aufstandsfläche abgestützt ist. Durch die eigene Abstützung kann so aber auch jener Gewichtsanteil an Schmelze ermittelt werden, welcher sich noch im Bereich der Anlage befindet. Damit kann so ein noch besser abgestimmtes Behandlungsergebnis für die Schmelze erzielt werden.

Zum besseren Verständnis der Erfindung wird diese anhand der nachfolgenden Figuren näher erläutert.

Es zeigen jeweils in stark vereinfachter, schematischer Darstellung:
- Fig. 1: einen Teil einer nicht vom Schutzumfang umfassten Anlage mit einem Reaktor zur Behandlung der Kunststoffschmelze, im Schnitt;
- Fig. 2: einen Teil des nicht vom Schutzumfang umfassten Reaktorgehäuses im Querschnitt, gemäß den Linien II-II in Fig. 1;
- Fig. 3: eine mögliche andere Anordnung der Abstützung des Reaktors an der Aufstandsfläche;
- Fig. 4: eine weitere mögliche Ausführungsvariante eines Reaktors mit einer Mehrfachanordnung von Reaktorgehäuseteilen, in Ansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine Vorgehensweise darstellen muss.

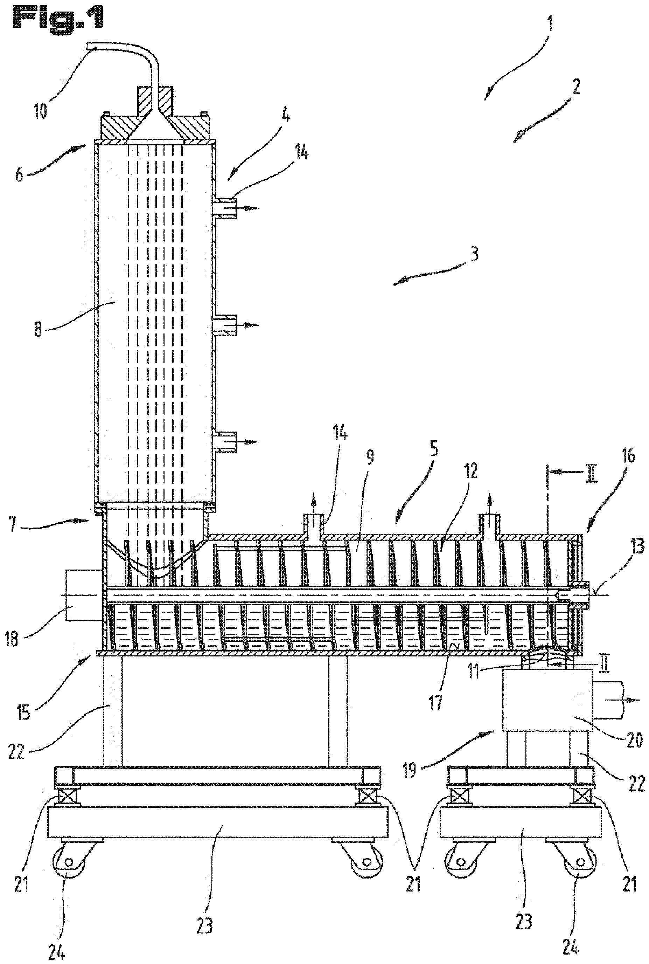

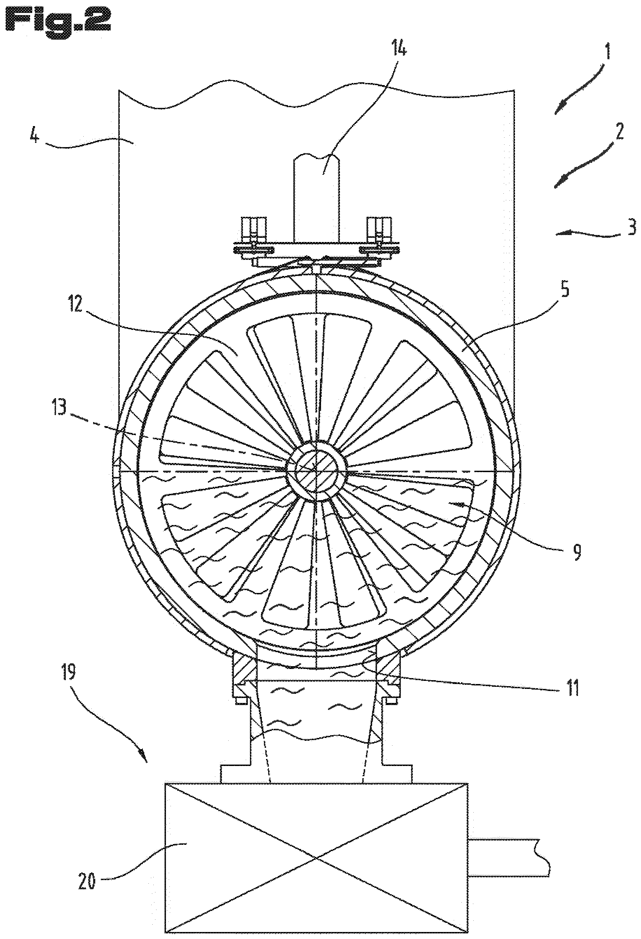

In den Fig. 1 bis 3 ist vereinfacht ein Teil einer Anlage 1 zur Behandlung einer Kunststoffschmelze, insbesondere einer Polykondensatschmelze, gezeigt, wobei das in den Fig. 1 und 2 gezeigte Ausführungsbeispiel nicht vom Schutzumfang umfasst ist.

Unter Behandlung wird insbesondere die Einstellung von deren intrinsischen Viskosität bzw. deren Grenzviskosität verstanden. Zumeist bzw. bevorzugt wird die Kunststoffschmelze entweder aus Neuware oder aber auch aus einer Recyclingware gebildet. Handelt es sich beispielsweise um Recyclingware, weist die Kunststoffschmelze einen geringen Wert an intrinsischer Viskosität aufgrund der bereits erfolgten Verarbeitung zu einem Gegenstand auf. Um den Wert der intrinsischen Viskosität der Kunststoffschmelze zu erhöhen, ist bei Polykondensaten ein Polykondensationsvorgang durchzuführen, bei welchem sich Monomere unter Abspaltung von Reaktionsprodukten, wie zum Beispiel Wasser, miteinander verknüpfen. Mit diesem Verknüpfungsprozess ist ein Kettenwachstum verbunden, wodurch sich auch die Molekülkettenlängen erhöhen, welche maßgeblich die mechanischen Eigenschaften von daraus hergestellten Produkten beeinflussen. Dieser Vorgang ist nicht nur bei der Herstellung von Neuware von Bedeutung, sondern spielt ganz besonders beim Recycling von derartigen Produkten eine wesentliche Rolle. Das zu verarbeitende Recyclingmaterial kann zunächst z.B. sortiert, zerkleinert, ggf. gereinigt, aufgeschmolzen, entgast und gefiltert werden. Diese so vorbereitete Kunststoffschmelze wird in der Anlage 1 behandelt, um diese nicht nur von ungewünschten Zusatzstoffen weiter zu reinigen, sondern auch die intrinsische Viskosität auf den gewünschten Wert einzustellen. Dabei handelt es sich zumeist um eine Erhöhung der intrinsischen Viskosität, kann aber auch eine Senkung derselben beinhalten. Bei den Polykondensaten handelt es sich um Thermoplaste, wie zum Beispiel PET, PBT; PEN, PC, PA oder Werkstoffe aus Polyester oder dergleichen.

Die hier gezeigte Anlage 1 umfasst unter anderem einen Reaktor 2 mit einem vereinfacht dargestellten Reaktorgehäuse 3, welches seinerseits zumindest einen ersten Reaktorgehäuseteil 4 sowie zumindest ein unmittelbar daran anschließendes zweites Reaktorgehäuseteil 5 aufweist. Der erste Reaktorgehäuseteil 4 weist seinerseits einen oberen Endbereich 6 und einen davon distanziert angeordneten, unteren Endbereich 7 auf. Zwischen dem oberen Endbereich 6 und dem unteren Endbereich 7 erstreckt sich innerhalb des ersten Reaktorgehäuseteils 4 ein erster Kammerteil 8. Bevorzugt weist der erste Reaktorgehäuseteil 4 eine vertikale Ausrichtung zwischen seinem oberen Endbereich 6 und seinem unteren Endbereich 7 auf, wodurch auch der erste Kammerteil 8 eine vertikale Höhenerstreckung innerhalb desselben aufweist. Der erste Reaktorgehäuseteil 4 stellt somit eine in etwa turmförmige Ausbildung dar.

Der zumindest zweite Reaktorgehäuseteil 5 ist im vorliegenden Ausführungsbeispiel ebenfalls Bestandteil des Reaktorgehäuses 3 und im Bereich des unteren Endbereichs 7 des mindestens ersten Reaktorgehäuseteils 4 unmittelbar daran anschließend angeordnet. Der zweite Reaktorgehäuseteil 5 bildet bzw. umgrenzt einen zweiten Kammerteil 9. Die beiden Kammerteile 8, 9 stehen miteinander zumindest im unbefüllten Betriebszustand des Reaktors 2 in Strömungsverbindung und sind somit miteinander verbunden. Bevorzugt kann jeder der Reaktorgehäuseteile 4, 5 aus einem oder aber auch mehreren Bauteilen zusammengesetzt sein. Gleichfalls können auch unterschiedliche Längen bzw. Höhen der beiden Reaktorgehäuseteile 4, 5 gewählt werden. Um einen Zutritt von Umgebungsluft in die von den Reaktorgehäuseteilen 4, 5 umgrenzten Kammerteile 8, 9 verhindern zu können, können diese auch noch gegenüber der äußeren Umgebung abgedichtet ausgebildet sein.

Weiters ist hier noch dargestellt, dass im Bereich des oberen Endbereichs 6 des ersten Reaktorgehäuseteils 4 an zumindest einer Einlassöffnung zumindest eine Zufuhrleitung 10 für die Kunststoffschmelze in den ersten Reaktorgehäuseteil 4 einmündet. Damit kann die zu behandelnde Kunststoffschmelze in den ersten Reaktorgehäuseteil 4 zu deren Behandlung eingeleitet werden. Um die Kunststoffschmelze wieder aus dem Reaktor 2, insbesondere dessen Reaktorgehäuse 3 ableiten bzw. entnehmen zu können, ist dazu im zweiten Reaktorgehäuseteil 5 zumindest eine Auslassöffnung 11 für die Kunststoffschmelze angeordnet oder ausgebildet.

Zur weiteren Behandlung der im Reaktorgehäuse 3 befindlichen Kunststoffschmelze ist hier noch vorgesehen, dass im zweiten Reaktorgehäuseteil 5 zumindest ein darin aufgenommenes Mischelement 12 angeordnet sein kann. Das zumindest eine Mischelement 12 ist im zweiten Reaktorgehäuseteil 5 um eine Rotationsachse 13 drehbar gelagert. Dabei sei bemerkt, dass die Rotationsachse 13 nicht unbedingt eine körperliche durchgängige Achse darstellen muss, sondern auch nur eine fiktive Achse darstellen kann. Das Mischelement 12 kann unterschiedlichst ausgebildet sein. So wäre es beispielsweise möglich, mehrere scheibenförmige Elemente hintereinander zur Durchmischung der Kunststoffschmelze im zweiten Reaktorgehäuseteil 5 anzuordnen. Es wäre aber auch möglich, das Mischelement 12 durch einen oder auch mehrere helixförmige Stege oder dergleichen auszubilden. Das Mischelement 12 dient überwiegend dazu, den Schmelzespiegel bzw. die Oberfläche des Schmelzebades, welches im zweiten Kammerteil 9 des zweiten Reaktorgehäuseteiles 5 befindlich ist, in Bewegung zu halten und durch Aufreißen ständig zu erneuern. Durch diesen Behandlungsvorgang kann z.B. die im ersten Kammerteil 8 begonnene Polykondensation weiter fortgesetzt werden, wodurch eine weitere Erhöhung der intrinsischen Viskosität erzielbar ist. Das Mischelement 12 kann so ausgebildet sein, dass es nur einen Mischvorgang ohne jegliche Förderwirkung durchführt. Unabhängig davon kann aber vom Mischelement 12 auch eine gewisse Förderwirkung auf die Kunststoffschmelze ausgeübt werden, um so einen gerichteten Weitertransport zur Auslassöffnung 11 zu schaffen. Es können auch zueinander unterschiedliche Zonen hintereinander ausgebildet werden.

Die beiden Reaktorgehäuseteile 4, 5 können in ihrer Raumform unterschiedlichst ausgebildet sein, wobei bevorzugt der erste Reaktorgehäuseteil 4 und/oder der zweite Reaktorgehäuseteil 5 rohrförmig ausgebildet sein können. Unter rohrförmig wird bevorzugt ein kreisrunder Querschnitt verstanden. Eine Querschnittsabmessung kann z.B. einen Durchmesser von ca. 600 mm aufweisen. Es wären aber auch andere Querschnittsformen wie z.B. mehreckig, oval oder elliptisch denkbar. Ein Längenverhältnis der beiden Reaktorgehäuseteile 4, 5 zueinander kann basierend auf der Länge bzw. Höhe des ersten Reaktorgehäuseteils 4 zur Länge des zweiten Reaktorgehäuseteils 5 z.B. 1 : 0,5 bis 1 : 4, bevorzugt 1 : 1 bis 1 : 3, betragen.

Weiters kann im oberen Endbereich 6 des ersten Reaktorgehäuseteils 4 der über die Zufuhrleitung 10 zugeführte Schmelzestrom durch eine Lochplatte oder ein Sieb hindurchgeleitet, insbesondere mit einem auf die Schmelze einwirkenden Druck hindurchgedrückt werden, um so eine Vielzahl von dünnen Schmelzefäden zu erzeugen. Die dünnen Schmelzefäden passieren den ersten Kammerteil 8 im freien Fall. Dabei kann die Anzahl der Öffnungen bzw. Löcher an den Massedurchsatz in entsprechender Weise angepasst werden. Weiters kann durch die Höhe bzw. Länge des ersten Reaktorgehäuseteils 4 die Falldauer des Schmelzestroms bzw. der dünnen Schmelzefäden beeinflusst werden. Je höher bzw. länger der erste Reaktorgehäuseteil 4 ausgebildet wird, kann somit auch die Behandlungsdauer der Schmelze in diesem Abschnitt beeinflusst werden. Weiters kann durch die Schwerkraft auch noch ein Verdünnen der einzelnen Schmelzefäden mit einhergehen.

Der Reaktor 2, insbesondere dessen Reaktorgehäuse 3, kann in Abhängigkeit vom zu behandelnden Kunststoffmaterial auf einer entsprechenden Temperatur gehalten werden. Die dafür vorgesehenen Temperierelemente können mit den unterschiedlichsten Temperiermedien versorgt bzw. betrieben werden. So kann der Reaktor 2, insbesondere dessen Reaktorgehäuse 3, mit flüssigen und/oder gasförmigen Temperiermedien umspült sein. Es können aber auch andere Energieträger oder Energieformen, wie. z.B. elektrische Energie, eingesetzt werden

Wie bereits zuvor beschrieben, stehen die Kammerteile 8, 9 der Reaktorgehäuseteile 4, 5 miteinander in Strömungsverbindung und sind gegenüber der äußeren Umgebung abgedichtet. Des Weiteren ist es auch noch möglich, die Kammerteile 8, 9 gegenüber dem Umgebungsdruck auf einen dazu geringeren Druck abzusenken. Dazu können eine oder mehrere Anschlussöffnungen an zumindest einem der Reaktorgehäuseteile 4, 5 vorgesehen sein, welche ihrerseits über zumindest eine Absaugleitung 14 mit einem nicht näher dargestellten Unterdruckerzeuger in Strömungsverbindung stehen. Um z.B. einen gleichmäßigen, abgesenkten Druck innerhalb der Kammerteile 8, 9 zu erzielen, können auch mehrere Anschlussöffnungen vorgesehen sein, wobei diese verteilt sowohl am ersten Reaktorgehäuseteil 4 und/oder am zweiten Reaktorgehäuseteil 5 angeordnet sein können. Bevorzugt sind die Anschlussöffnungen und die damit in Verbindung stehenden Absaugleitungen 14 im Bereich des zweiten Reaktorgehäuseteils 5 an dessen Oberseite angeordnet. Die von den beiden Reaktorgehäuseteilen 4, 5 umgrenzten Kammerteile 8 können auf einen Druck kleiner 100 mbar evakuiert werden. Bevorzugt wird ein Druck zwischen 0,5 mbar und 20 mbar gewählt. Je höher der Unterdruck und damit geringer der Absolutdruck in den Kammerteilen 8, 9 ist, desto rascher und besser ist das Behandlungsergebnis der Kunststoffschmelze. Dieses Ergebnis ist auch noch von der in den Kammerteilen 8, 9 herrschenden Temperatur abhängig, welche je nach dem zu behandelnden Kunststoffwerkstoff zu wählen ist.

Weiters wäre es auch noch möglich, dass innerhalb der der ersten Reaktorgehäuseteils 4 und/oder des zweiten Reaktorgehäuseteils 5 unterschiedliche Zonen mit einem zueinander unterschiedlichen Druck, nämlich einem unterschiedlich hohem Vakuum vorzusehen. Damit kann innerhalb der Kammerteile 8, 9 ein differentielles Vakuum in zumindest einem der Reaktorgehäuseteil 4 und/oder 5 realisiert werden. Dieses differentielle Vakuum bzw. der unterschiedliche Druck kann z.B. durch differentielles Pumpen erreicht werden. Die unterschiedlichen Zonen können durch Lochblenden, Siebe, einem Zwischenboden oder aber auch Verengungen im Reaktorgehäuseteil 4, 5 oder aber auch anderer Strömungshindernisse gebildet werden.

Weiters ist es auch möglich, dass die zumindest eine Absaugleitung 14 zumindest bereichsweise mit einem Heizelement versehen bzw. umgeben ist. Das Heizelement kann beispielsweise ein mit elektrischer Energie betriebenes Heizelement sein. Es wäre aber auch möglich, die Absaugleitung 14 an deren Außenseite mit einem im Abstand bzw. Distanz dazu angeordneten Umhüllungselement zu umgeben und in dem zwischen der Absaugleitung 14 und dem Umhüllungselement ausgebildeten Zwischenraum beispielsweise ein Temperiermedium, beispielsweise eine Flüssigkeit oder ein Gas, mit entsprechender Temperatur hindurchzuleiten. Damit kann ein Kondensieren von abzusaugenden Bestandteilen aus den Kammerteilen 8, 9 in den Absaugleitungen 14 vermieden werden.

Wie bereits zuvor beschrieben, weist der erste Reaktorgehäuseteil 4 eine bevorzugt vertikale Ausrichtung auf. Der zweite Reaktorgehäuseteil 5 weist im vorliegenden Ausführungsbeispiel eine in etwa horizontal verlaufend ausgerichtete Längserstreckung mit voneinander distanziert angeordneten ersten und zweiten Endbereichen 15, 16 auf. Damit wird eine "L"-Form von beiden Reaktorgehäuseteilen 4, 5 ausgebildet. Das zumindest eine im zweiten Reaktorgehäuseteil 5 angeordnete Mischelement 12 weist bevorzugt bei einem kreisrund ausgebildeten Querschnitt des zweiten Reaktorgehäuseteils 5 eine koaxial dazu verlaufende Anordnung auf. Bei einem Rundrohr verläuft somit die Rotationsachse 13 im Zentrum des Reaktorgehäuseteils 5.

Aufgrund dieser zentrischen bzw. koaxialen Anordnung des Mischelements 12 kann dieses in einem Minimalabstand von kleiner 1,0 mm von einer Innenwand 17 des zweiten Reaktorgehäuseteils 5 angeordnet sein. Je geringer der Minimalabstand des Mischelements 12 von der Innenwand 17 gewählt wird, desto weniger an Kunststoffschmelze kann an der Innenwand 17 des zweiten Reaktorgehäuseteils 5 angelagert werden, da, je nach Ausbildung des Mischelements 12 dieses die abgelagerte Kunststoffschmelze von der Innenwand 17 zumindest bereichsweise abstreifen kann. So wäre es beispielsweise auch noch möglich, am äußeren Umfang des Mischelements 12 dieses mit einem zusätzlichen, nicht näher dargestellten Aufsatzelement zu versehen, welches dann in direktem Kontakt mit der Innenwand 17 stehen kann. Je nach Wahl und Härte des Aufsatzelements kann damit ein metallischer Kontakt zwischen dem Mischelement 12 und der Innenwand 17 des Reaktorgehäuseteils 5 vermieden werden. Des Weiteren ist auf wärmebedingte Längenänderungen zwischen dem Kaltzustand der Anlage 1 und deren Betriebszustand Bedacht zu nehmen.

Unabhängig davon wäre es aber auch möglich, das Mischelement 12 in einem Minimalabstand von größer 1,0 mm, insbesondere größer von 50 mm, insbesondere größer 150 mm von der Innenwand 17 des zweiten Reaktorgehäuseteils 5 anzuordnen. Durch die Vergrößerung des Minimalabstandes kann so ein Rückströmen und damit ein mehrfaches Umwälzen der im zweiten Kammerteil 9 befindlichen Kunststoffschmelze erzielt werden. Dadurch kann beispielsweise auch noch eine weitere Erhöhung der intrinsischen Viskosität erreicht werden.

Im vorliegenden Ausführungsbeispiel erstreckt sich das Mischelement 12 über die Längserstreckung des zweiten Kammerteils 9 zwischen den voneinander distanziert angeordneten ersten und zweiten Endbereichen 15, 16 des zweiten Reaktorgehäuseteils 5. Damit ist weiters das Mischelement 12 vollständig im zweiten Kammerteil 9 angeordnet. Es erfolgt lediglich die Lagerung des Mischelements 12 beispielsweise an Endwänden des zweiten Reaktorgehäuseteils 5.

Da sich das Mischelement 12 über die innere Längserstreckung zwischen dem ersten Endbereich 15 und dem zweiten Endbereich 16 des zweiten Reaktorgehäuseteils 5 erstreckt, ist auch der Schmelzespiegel des Schmelzebades im zweiten Kammerteil 9 mit einer annähernd gleichen Längserstreckung wie das Mischelement 12 ausgebildet. Weiters kann damit so auf den Schmelzespiegel des Schmelzebades während dessen Durchmischung der gegenüber dem Umgebungsdruck abgesenkte Druck, beispielsweise von kleiner 100 mbar darauf einwirken.

Weiters ist hier noch dargestellt, dass das Mischelement 12 mit einer eigenen, unabhängigen ersten Antriebsvorrichtung 18 in Antriebsverbindung steht. Damit wird es möglich, das oder die Mischelemente 12 mit einer eigenen Rotationsgeschwindigkeit betreiben zu können, welche unabhängig von anderen Antriebsorganen gewählt werden kann. So kann je nach einzustellender und/oder zu erhöhender intrinsischer Viskosität die Durchmischung der Kunststoffschmelze, insbesondere die Intensität der Durchmischung, frei gewählt werden. Damit kann die Kunststoffschmelze im zweiten Kammerteil 9 des zweiten Reaktorgehäuseteils 5 vom Mischelement 12 ständig bewegt und durchmischt werden.

Anschließend an die im zweiten Reaktorgehäuseteil 5 angeordnete Auslassöffnung 11 ist im vorliegenden Ausführungsbeispiel eine Austragsvorrichtung 19 für die Kunststoffschmelze angeordnet. Bei dieser Austragsvorrichtung 19 kann es sich beispielsweise um eine Schmelzepumpe, einen Extruder oder ähnliches handeln. Um eine unabhängige Entnahmemenge oder ein unabhängiges Entnahmegewicht der Kunststoffschmelze aus dem zweiten Reaktorgehäuseteil 5 festlegen zu können, ist hier weiters vorgesehen, dass die Austragsvorrichtung 19 mit einer zweiten Antriebsvorrichtung 20 in Antriebsverbindung steht. Dabei kann die zweite Antriebsvorrichtung 20 unabhängig von der ersten Antriebsvorrichtung 18 des Mischelements 12 angetrieben sein. Durch diese Entkopplung der beiden Antriebsvorrichtungen 18, 20 kann eine individuellere Einstellung und Anpassung der intrinsischen Viskosität der zu behandelnden Kunststoffschmelze erzielt werden.

Die zumindest eine Auslassöffnung 11 für die Kunststoffschmelze ist hier im Bereich des vom ersten Reaktorgehäuseteil 4 distanziert angeordneten zweiten Endbereichs 16 des zweiten Reaktorgehäuseteils 5 sowie in einem Bodenbereich desselben angeordnet.

Um rasch ein Ergebnis des im Reaktor 2 durchgeführten Behandlungsergebnisses zu erhalten, ist es vorteilhaft, wenn von einer Messvorrichtung ein Messwert der intrinsischen Viskosität der behandelten Kunststoffschmelze im Bereich der Auslassöffnung 11 oder einem unmittelbar daran anschließenden Austragsabschnitt der Kunststoffschmelze ermittelt wird. Damit kann im unmittelbaren Anschluss an den Reaktor 2 eine Inlinemessung durchgeführt werden und so ohne verursachen eines hohen Ausschusses die Behandlungs- bzw. Verfahrensparameter nachjustiert bzw. eingestellt werden, um den vorgegebenen Wert der intrinsischen Viskosität zu erreichen.

Wie bereits zuvor beschrieben, ist im zweiten Reaktorgehäuseteil 5 zumindest eine Auslassöffnung 11 vorgesehen, welche im vorliegenden Ausführungsbeispiel in einem unteren Umfangsbereich des Bodenbereich des zweiten Reaktorgehäuseteils 5 angeordnet ist.

Weiters ist auch noch in der Fig. 1 vereinfacht dargestellt, dass der Reaktor 2 unter Zwischenschaltung zumindest einer Gewichtsermittlungsvorrichtung 21 an einer Aufstandsfläche, beispielsweise einem ebenen Hallenboden oder dergleichen abgestützt sein kann. Dadurch wird es möglich, das Gewicht des Reaktors 2 sowohl in seinem Leerzustand als auch im Betriebszustand mit der darin aufgenommenen und zu behandelnden Kunststoffschmelze ermitteln zu können.

Bevorzugt umfasst die Anlage 1 zumindest ein Traggerüst 22, wobei zumindest der Reaktor 2, insbesondere dessen Reaktorgehäuse 3, an dem zumindest einen Traggerüst 22 gehalten ist. Dadurch wird es in weiterer Folge möglich, dass dann das zumindest eine Traggerüst 22 mitsamt dem daran gehaltenen Reaktor 2 über mehrere der Gewichtsermittlungsvorrichtungen 21 an der Aufstandsfläche abgestützt ist. Weiters ist hier noch dargestellt, dass die zumindest eine Gewichtsermittlungsvorrichtung 21 bodennah bezüglich der Aufstandsfläche zwischen dieser und dem Traggerüst 22 angeordnet sein kann. Zusätzlich wäre es aber auch noch möglich, dass die zumindest eine Gewichtsermittlungsvorrichtung 21 an ihrer vom Reaktor 2 oder vom Traggerüst 22 abgewendeten und der Aufstandsfläche zugewendeten Seite an einem Grundrahmen 23 abgestützt ist.

Der Grundrahmen 23 kann weiters auch noch über Räder 24 an der Aufstandsfläche abgestützt sein. Damit wird es möglich, eine Ortsverlagerung des Reaktors 2 je nach Wahl und Ausbildung der Räder 24 durchführen zu können.

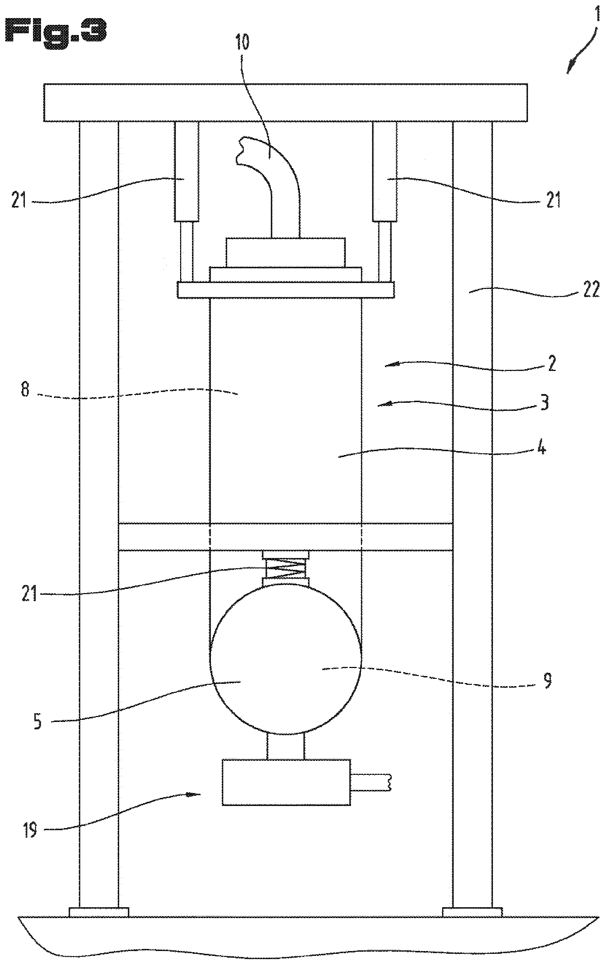

Unabhängig davon wäre es aber auch noch möglich, dass zumindest der Reaktor 2, insbesondere dessen Reaktorgehäuse 3 am Traggerüst 22 über die zumindest eine Gewichtsermittlungsvorrichtung 21 in einer hängenden Position am Traggerüst gehalten ist, wie dies aus der Fig. 3 näher dargestellt ist. Dabei sei erwähnt, dass diese Ausbildung der Abstützung für sich gegebenenfalls eine eigenständige Ausbildung darstellen kann.

Die zumindest eine Gewichtsermittlungsvorrichtung 21 kann beispielsweise durch eine Wiegezelle oder dergleichen gebildet sein. Ist der Reaktor 2, insbesondere dessen Reaktorgehäuse 3 am Traggerüst 22 in einer hängenden Position am Traggerüst 22 gehalten, kann die Gewichtsermittlungsvorrichtung 21 beispielsweise durch eine Zugwaage oder dergleichen gebildet sein. Weiters kann die zumindest eine Gewichtsermittlungsvorrichtung 21 mit einer Steuervorrichtung in Kommunikationsverbindung stehen. Damit wird es möglich, die von der oder von den Gewichtsermittlungsvorrichtungen 21 ermittelten Messwerte in der Steuervorrichtung zu verarbeiten und in weiterer Folge die für die Behandlung notwendigen Verfahrensparameter zu erstellen und an die Anlage 1 mit deren Anlagenkomponenten weiter zu leiten.

Weiters ist es aber auch noch möglich, dass auch die Austragsvorrichtung 19 unter Zwischenschaltung zumindest einer Gewichtsermittlungsvorrichtung 21 ebenfalls an der Aufstandsfläche abgestützt sein kann. Das Abstützen kann durch direktes Abstützen oder aber auch in einer hängenden Anordnung, wie bereits zuvor für den Reaktor 2 in der Fig. 3 beschrieben, erfolgen.

Der Betrieb einer derartigen Anlage 1 kann derart erfolgen, dass in einer nicht näher dargestellten und dem Reaktor 2 vorgeschalteten Aufbereitungsvorrichtung die zu behandelnde Kunststoffschmelze gebildet oder hergestellt wird. Wird die Kunststoffschmelze aus Recycelmaterialien gebildet, sind diese bevorzugt sortenrein zu trennen, um so eine Verunreinigung zu verhindern.

Die zu behandelnde Kunststoffschmelze wird dem Reaktor 2 über die zumindest eine im oberen Endbereich 6 des ersten Reaktorgehäuseteils 4 einmündende Zufuhrleitung 10 zugeführt. Anschließend passiert die Kunststoffschmelze den vom ersten Reaktorgehäuseteil 4 umgrenzten, ersten Kammerteil 8, welcher seinerseits eine vertikale Höhenerstreckung aufweist. Die Kunststoffschmelze wird anschließend in dem am unteren Endbereich 7 des ersten Reaktorgehäuseteils 4 anschließenden und vom zweiten Reaktorgehäuseteil 5 umgrenzt zweiten Kammerteil 9 gesammelt. Dabei wird von der gesammelten Kunststoffschmelze im zweiten Kammerteil 9 ein Schmelzebad mit einem Schmelzespiegel ausgebildet. Bei einem vordefinierten Soll-Füllstand der Kunststoffschmelze kann beispielsweise der Schmelzespiegel der Kunststoffschmelze im zweiten Kammerteil 9 des zweiten Reaktorgehäuseteils 5 in etwa in halber Höhe des zweiten Kammerteils 9 liegen. Diese Höhe bzw. das Niveau kann in etwa der Lage der Rotationsachse 13 entsprechen. Zur weiteren Behandlung wird das Schmelzebad im zweiten Reaktorgehäuseteil 5 vom Mischelement 12 bewegt und durchmischt wird. Dieser Mischvorgang kann bevorzugt ständig, gegebenenfalls auch mit zueinander unterschiedlicher Intensität durchgeführt werden. Anschließend an diesen Behandlungsvorgang der Kunststoffschmelze wird die behandelte Kunststoffschmelze durch zumindest die im zweiten Reaktorgehäuseteil 5 angeordnete Auslassöffnung 11 aus dem zweiten Kammerteil 9 entnommen bzw. abgeleitet.

Wie bereits zuvor beschrieben, bildet die Kunststoffschmelze im zweiten Kammerteil 9 je nach vordefiniertem bzw. vorgegebenem Soll-Füllstand den damit verbundenen Schmelzespiegel aus. Je nach Höhe des Schmelzespiegels im zweiten Kammerteil 9 kann die Entnahme der behandelten Kunststoffschmelze aus dem zweiten Kammerteil 9 in einem Winkel von 30°, bevorzugt von 90°, bezüglich einer Längsachse des zweiten Reaktorgehäuseteils unterhalb des Schmelzespiegels durchgeführt werden. Dadurch kann der Schmelzespiegel eine annähernd gleiche Längserstreckung wie das Mischelement aufweisen, wodurch so auf den Schmelzespiegel des Schmelzebades während der Durchmischung desselben der reduzierte Druck einwirken kann. Dazu ist je nach geometrischer Ausbildung des zweiten Reaktorgehäuseteils 5 die zumindest eine Auslassöffnung 11 in einem Winkel von 30°, bevorzugt von 90°, unterhalb bezüglich einer durch die Längsachse des zweiten Reaktorgehäuseteils 5 verlaufenden Horizontalebene anzuordnen.

Um den Massen- bzw. Gewichtshaushalt an der dem Reaktor 2 zugeführten und zu behandelnden Kunststoffschmelze in vorgegebenen Grenzen zur Masse bzw. dem Gewicht der Entnahme der behandelten Kunststoffschmelze beibehalten zu können, können die zuvor beschriebenen Gewichtsermittlungsvorrichtungen 21 angewendet werden. So kann beispielsweise vor der in Inbetriebnahme der Anlage 1 von der zumindest einen Gewichtsermittlungsvorrichtung 21 ein erster Messwert vom Eigengewicht des Reaktors 2 ohne die Kunststoffschmelze ermittelt werden. Dieser Messwert kann an eine Steuervorrichtung übertragen und gegebenenfalls in dieser abgespeichert werden. Anschließend daran wird die zu behandelnde Kunststoffschmelze dem Reaktor 2 zugeführt, wobei beim Erreichen eines Soll-Füllstandes der Kunststoffschmelze im zweiten Reaktorgehäuseteil 5 und der damit verbundenen Höhe des Schmelzespiegels im zweiten Kammerteil 9 ein zweiter Messwert von der zumindest einen Gewichtsermittlungsvorrichtung 21 ermittelt wird. Dabei ist es auch wieder möglich, diesen ermittelten, zweiten Messwert an die Steuervorrichtung zu übertragen und gegebenenfalls in dieser abzuspeichern. Der erste ermittelte Messwert entspricht dabei einem Netto-Gewicht des Reaktors 2. Dann kann von der Steuervorrichtung ein Differenzwert aus dem zweiten Messwert abzüglich des ersten Messwerts ermittelt werden. Durch die Steuervorrichtung kann dann in Abhängigkeit des aus dem zweiten Reaktorgehäuseteils 5 entnommenen Gewichts an behandelter Kunststoffschmelze das Gewicht an zugeführter und zu behandelnder Kunststoffschmelze im vorgegebenen Grenzen im Gleichgewicht bezüglich des zuvor ermittelten Differenzwertes gehalten werden. Mögliche Abweichungen des Gleichgewichts von den vorgegebenen Grenzen können beispielsweise +/- 50%, bevorzugt +/- 30%, besonders bevorzugt +/-15% betragen.

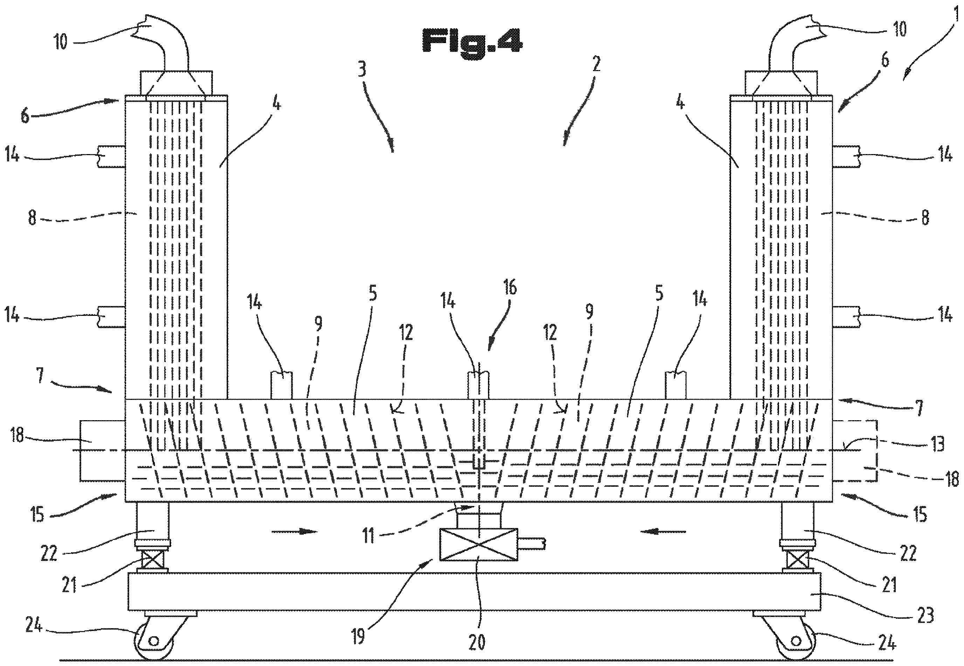

In der Fig. 4 ist eine weitere und gegebenenfalls für sich eigenständige Ausführungsform des Reaktors 2 zur Bildung der Anlage 1 gezeigt, wobei wiederum für gleiche Teile gleiche Bezugszeichen bzw. Bauteilbezeichnungen wie in den vorangegangenen Fig. 3 verwendet werden. Um unnötige Wiederholungen zu vermeiden, wird auf die detaillierte Beschreibung in den vorangegangenen Fig. 3 hingewiesen bzw. Bezug genommen. Dabei sei erwähnt, dass diese Ausbildung eine Variante zu den zuvor beschriebenen Ausführungen darstellt und lediglich eine Mehrfachanordnung von einzelnen Komponenten gewählt ist.

Das Reaktorgehäuse 3 umfasst hier jeweils zwei erste Reaktorgehäuseteile 4 und zwei zweite Reaktorgehäuseteile 5. Die beiden in etwa horizontal angeordneten Reaktorgehäuseteile 5 sind an ihren zweiten Endbereichen 16 einander zugewendet angeordnet und können dort miteinander zu einer Einheit miteinander verbunden sein. Bezüglich der beiden zweiten Endbereiche 16 erfolgt eine spiegelbildliche Anordnung der jeweiligen ersten und zweiten zusammengehörigen Reaktorgehäuseteile 4 und 5 zueinander. Bevorzugt wird an den einander zugewendeten zweiten Endbereichen 16 eine zentrale, bevorzugt gemeinsame, Auslassöffnung 11 vorgesehen.
Es wäre aber auch möglich, die zwei zweiten Reaktorgehäuseteile 5 aus einem einzigen durchgehenden Bauelement auszubilden. Weiters wäre es aber auch noch denkbar, dass die zweiten Reaktorgehäuseteile 5 aus mehreren Einzelkomponenten zusammengesetzt sind.

Innerhalb der beiden zweiten Kammerteile 9 ist auch wiederum das zumindest eine Mischelement 12 angeordnet. Um eine gerichtete Förderbewegung für die Kunststoffschmelze zu erzielen, kann bei den Mischelementen 12 eine gegenläufig aufeinander in Richtung auf die bevorzugt gemeinsame Auslassöffnung 11 ausgerichtete Steigung vorgesehen sein. Die im Betrieb in den zweiten Reaktorgehäuseteilen 5 befindliche Schmelze ist mit kurzen Strichen angedeutet, wobei unterhalb der beiden zweiten Reaktorgehäuseteile 5 die aufeinander zu gerichtete Förderbewegung derselben mit Pfeilen angedeutet ist. Es ist auch hier denkbar, in jedem der zweiten Reaktorgehäuseteile 5 ein unabhängiges Mischelement 12 vorzusehen. In diesem Fall könnte eine zentrale Lagerstelle zwischen den beiden Mischelementen 12 vorgesehen werden, wobei dann jedes der Mischelemente 12 mit einer eigenen ersten Antriebsvorrichtung 18 anzutreiben ist, wie dies im rechten Teil des Reaktors 2 mit strichlierten Linien angedeutet ist.

Es wäre aber auch möglich, die beiden Mischelemente 12 zu einem zusammengehörigen Bauteil zu verbinden oder überhaupt einstückig auszubilden. Bei dieser Ausführungsform kann dann mit einer einzigen ersten Antriebsvorrichtung 18 das Auslangen gefunden werden.

Gleichfalls ist auch hier zumindest eine Austragsvorrichtung 19 im Bereich der zumindest einen Auslassöffnung 11 vorgesehen. Bevorzugt wird eine zentrale Anordnung nur einer Auslassöffnung 11 gewählt, um so die Schmelze mittels nur einer Austragsvorrichtung 19 zu einer nachfolgenden, nicht näher dargestellten Vorrichtung zu fördern. Die Kammerteile 8, 9 können gleichfalls über Absaugleitungen 14 auf einen gegenüber dem Umgebungsdruck abgesenkten Druck evakuiert werden.

Der gesamte Reaktor 2 kann wiederum über die zuvor beschriebenen Gewichtsermittlungsvorrichtungen 21, gegebenenfalls unter Zwischenschaltung des Traggerüsts 22 an der Aufstandsfläche abgestützt sein. Das oder die Gewichtsermittlungsvorrichtungen 21 können auf der vom Reaktor 2 abgewendeten Seite an einem Grundrahmen 23 abgestützt sein. Der Grundrahmen 23 kann dann wiederum über mehrere Räder 24 an der Aufstandsfläche abgestützt sein.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der Anlage 1 diese bzw. deren Bestandteile teilweise unmaßstäblich und/oder vergrößert und/oder verkleinert dargestellt wurden.

### Bezugszeichenaufstellung

- 1: Anlage
- 2: Reaktor
- 3: Reaktorgehäuse
- 4: erster Reaktorgehäuseteil
- 5: zweiter Reaktorgehäuseteil
- 6: oberer Endbereich
- 7: unterer Endbereich
- 8: erster Kammerteil
- 9: zweiter Kammerteil
- 10: Zufuhrleitung
- 11: Auslassöffnung
- 12: Mischelement
- 13: Rotationsachse
- 14: Absaugleitung
- 15: erster Endbereich
- 16: zweiter Endbereich
- 17: Innenwand
- 18: erste Antriebsvorrichtung
- 19: Austragsvorrichtung
- 20: zweite Antriebsvorrichtung
- 21: Gewichtsermittlungsvorrichtung
- 22: Traggerüst
- 23: Grundrahmen
- 24: Rad

## Patentansprüche

1. Anlage (1) zur Behandlung einer Kunststoffschmelze, insbesondere einer Polykondensatschmelze, und Einstellung von deren intrinsischen Viskosität, mit einem Reaktor (2), der ein Reaktorgehäuse (3) mit zumindest einem ersten Reaktorgehäuseteil (4) mit einem oberen Endbereich (6) und einem unteren Endbereich (7) und einen sich zwischen dem oberen und unteren Endbereich (6, 7) erstreckenden ersten Kammerteil (8) aufweist, wobei der erste Kammerteil (8) eine vertikale Höhenerstreckung aufweist, und das Reaktorgehäuse (3) im Bereich des unteren Endbereichs (7) des mindestens einen ersten Reaktorgehäuseteils (4) ein unmittelbar daran anschließendes, zumindest zweites Reaktorgehäuseteil (5) mit einem zweiten Kammerteil (9) aufweist, wobei der mindestens eine zweite Reaktorgehäuseteil (5) eine in etwa horizontal verlaufend ausgerichtete Längserstreckung mit einem ersten Endbereich (15) und einem davon distanziert angeordneten zweiten Endbereich (16) aufweist, und die Kammerteile (8, 9) miteinander in Strömungsverbindung stehen sowie gegenüber der äußeren Umgebung abgedichtet ausgebildet sind, und im Bereich des oberen Endbereichs (6) des mindestens einen ersten Reaktorgehäuseteils (4) an zumindest einer Einlassöffnung zumindest eine Zufuhrleitung (10) für die Kunststoffschmelze in den mindestens einen ersten Reaktorgehäuseteil (4) einmündet und im mindestens einen zweiten Reaktorgehäuseteil (5) zumindest eine Auslassöffnung (11) für die Kunststoffschmelze angeordnet ist, und wobei die zumindest eine Auslassöffnung (11) für die Kunststoffschmelze im Bereich des vom mindestens einen ersten Reaktorgehäuseteil (4) distanziert angeordneten zweiten Endbereichs (16) des mindestens einen zweiten Reaktorgehäuseteils (5) angeordnet ist, und die miteinander in Strömungsverbindung stehenden Kammerteile (8, 9) der ersten und zweiten Reaktorgehäuseteile (4, 5) über zumindest eine Anschlussöffnung und zumindest eine Absaugleitung (14) mit einem Unterdruckerzeuger in Strömungsverbindung stehen, und mit zumindest einem im mindestens einen zweiten Reaktorgehäuseteil (5) angeordneten Mischelement (12), welches Mischelement (12) im mindestens einen zweiten Reaktorgehäuseteil (5) um eine Rotationsachse (13) drehbar gelagert ist,
wobei das Reaktorgehäuse (3) zwei erste Reaktorgehäuseteile (4) und zwei zweite Reaktorgehäuseteile (5) umfasst,
**dadurch gekennzeichnet,**
- **dass** die beiden horizontal angeordneten zweiten Reaktorgehäuseteile (5) an ihren zweiten Endbereichen (16) einander zugewendet angeordnet sind und an den zweiten Endbereichen (16) miteinander zu einer Einheit verbunden sind,
- **dass** die zumindest eine Auslassöffnung (11) in einem Bodenbereich der zweiten Reaktorgehäuseteile (5) angeordnet ist, und
- **dass** sich das mindestens eine Mischelement (12) jeweils über die Längserstreckung der zweiten Kammerteile (9) zwischen den voneinander distanziert angeordneten ersten und zweiten Endbereichen (15, 16) der zweiten Reaktorgehäuseteile (5) erstreckt und vollständig in jedem der zweiten Kammerteile (9) angeordnet ist.

2. Anlage (1) nach Anspruch 1, **dadurch gekennzeichnet, dass** die ersten Reaktorgehäuseteile (4) und/oder die zweiten Reaktorgehäuseteile (5) rohrförmig ausgebildet sind und dass die Rotationsachse (13) des Mischelements (12) koaxial bezüglich des rohrförmig ausgebildeten zweiten Reaktorgehäuseteils (5) angeordnet ist.

3. Anlage (1) nach Anspruch 2, **dadurch gekennzeichnet, dass** das Mischelement (12) in einem Minimalabstand von kleiner 1,0 mm von einer Innenwand (17) des zweiten Reaktorgehäuseteils (5) angeordnet ist oder das Mischelement (12) in einem Minimalabstand von größer 1,0 mm, insbesondere größer 20 mm, von der Innenwand (17) des zweiten Reaktorgehäuseteils angeordnet ist.

4. Anlage (1) nach einem der Ansprüche 1 bis 3, **dadurch gekennzeichnet, dass** in jedem der zweiten Reaktorgehäuseteile (5) ein unabhängiges Mischelement (12) vorgesehen ist und jedes der Mischelemente (12) mit einer eigenen, unabhängigen ersten Antriebsvorrichtung (18) in Antriebsverbindung steht.

5. Anlage (1) nach einem der Ansprüche 1 bis 3, **dadurch gekennzeichnet, dass** die in den beiden zweiten Reaktorgehäuseteilen (5) angeordneten Mischelemente (12) zu einem zusammengehörigen Bauteil miteinander verbunden sind und die Mischelemente (12) eine gegenläufig ausgerichtete Steigung aufweisen.

6. Anlage (1) nach einem der Ansprüche 1 bis 5, **dadurch gekennzeichnet, dass** die zumindest eine Auslassöffnung (11) im zweiten Reaktorgehäuseteil (5) in einem Winkel von 30°, bevorzugt von 90°, unterhalb bezüglich einer durch eine Längsachse des zweiten Reaktorgehäuseteils (5) verlaufenden Horizontalebene angeordnet ist.

7. Anlage (1) nach einem der Ansprüche 1 bis 6, **dadurch gekennzeichnet, dass** anschließend an die zumindest eine Auslassöffnung (11) im zweiten Reaktorgehäuseteil (5) eine Austragsvorrichtung (19) für die Kunststoffschmelze angeordnet ist.

8. Anlage (1) nach Anspruch 7, **dadurch gekennzeichnet, dass** die Austragsvorrichtung (19) mit einer zweiten Antriebsvorrichtung (20) in Antriebsverbindung steht, wobei die zweite Antriebsvorrichtung (20) unabhängig von der oder den ersten Antriebsvorrichtungen (18) des oder der Mischelemente (12) angetrieben ist.

9. Anlage (1) nach einem der Ansprüche 1 bis 8, **dadurch gekennzeichnet, dass** der Reaktor (2) unter Zwischenschaltung zumindest einer Gewichtsermittlungsvorrichtung (21) an einer Aufstandsfläche abgestützt ist und dass die zumindest eine Gewichtsermittlungsvorrichtung (21) durch eine Wiegezelle oder eine Zugwaage gebildet ist, wobei die zumindest eine Gewichtsermittlungsvorrichtung (21) mit einer Steuervorrichtung in Kommunikationsverbindung steht.

10. Verfahren zur Behandlung einer Kunststoffschmelze, insbesondere einer Polykondensatschmelze, und Einstellung von deren intrinsischen Viskosität, bei dem die zu behandelnde Kunststoffschmelze einem Reaktor (2) mit einem Reaktorgehäuse (3), umfassend zumindest ein erstes und zumindest ein zweites Reaktorgehäuseteil (4, 5), über zumindest eine in einem oberen Endbereich (6) des mindestens einen ersten Reaktorgehäuseteils (4) einmündende Zufuhrleitung (10) zugeführt wird, anschließend die Kunststoffschmelze einen vom mindestens einen ersten Reaktorgehäuseteil (4) umgrenzten ersten Kammerteil (8) mit einer vertikalen Höhenerstreckung passiert, die Kunststoffschmelze in einem an einem unteren Endbereich (7) des mindestens einen ersten Reaktorgehäuseteils (4) anschließenden und vom mindestens einen zweiten Reaktorgehäuseteil (5) umgrenzten zweiten Kammerteil (9) gesammelt wird, und dabei von der gesammelten Kunststoffschmelze im mindestens einen zweiten Kammerteil (9) ein Schmelzebad mit einem Schmelzespiegel ausgebildet wird, wobei der zweite Kammerteil (9) eine in etwa horizontal verlaufend ausgerichtete Längserstreckung mit einem ersten Endbereich (15) und einem davon distanziert angeordneten zweiten Endbereich (16) aufweist, und die beiden Kammerteile (8, 9) miteinander in Strömungsverbindung stehen sowie gegenüber der äußeren Umgebung abgedichtet und mit einem Unterdruckerzeuger auf einen Druck kleiner 100 mbar evakuiert werden, das Schmelzebad im mindestens einen zweiten Reaktorgehäuseteil (5) von einem um eine Rotationsachse (13) drehbar gelagerten Mischelement (12) bewegt und durchmischt wird, und die behandelte Kunststoffschmelze durch zumindest eine im Bereich des vom ersten Reaktorgehäuseteil (4) distanziert angeordneten zweiten Endbereichs (16) des mindestens einen zweiten Reaktorgehäuseteils (5) angeordnete Auslassöffnung (11) aus dem zweiten Kammerteil (9) entnommen wird,
wobei das Reaktorgehäuse (3) aus zwei ersten Reaktorgehäuseteilen (4) und zwei zweiten Reaktorgehäuseteilen (5) gebildet wird,
**dadurch gekennzeichnet,**
- **dass** die beiden horizontal angeordneten zweiten Reaktorgehäuseteile (5) an ihren zweiten Endbereichen (16) einander zugewendet und an den zweiten Endbereichen (16) miteinander zu einer Einheit verbunden werden, und
- **dass** die Entnahme der behandelten Kunststoffschmelze aus den zweiten Kammerteilen (9) der beiden zweiten Reaktorgehäuseteile (5) in einem Winkel von 30°, bevorzugt von 90°, bezüglich einer Längsachse der zweiten Reaktorgehäuseteile (5) unterhalb des Schmelzespiegels durchgeführt wird, sodass der Schmelzespiegel eine annähernd gleiche Längserstreckung wie die Mischelemente (12) aufweist und so auf den Schmelzespiegel des Schmelzebades während der Durchmischung des Schmelzebades der reduzierte Druck einwirkt.

11. Verfahren nach Anspruch 10, **dadurch gekennzeichnet, dass** in jedem der zweiten Reaktorgehäuseteile (5) ein unabhängiges Mischelement (12) vorgesehen wird und jedes der Mischelemente (12) von einer eigenen, unabhängigen ersten Antriebsvorrichtung (18) angetrieben wird.

12. Verfahren nach Anspruch 10, **dadurch gekennzeichnet, dass** die in den beiden zweiten Reaktorgehäuseteilen (5) angeordneten Mischelemente (12) zu einem zusammengehörigen Bauteil miteinander verbunden werden und die Mischelemente (12) mit einer gegenläufig ausgerichteten Steigung ausgebildet werden.

13. Verfahren nach einem der Ansprüche 10 bis 12, **dadurch gekennzeichnet, dass** die Kunststoffschmelze in jedem der zweiten Kammerteile (9) der zweiten Reaktorgehäuseteile (5) vom Mischelement (12) ständig bewegt und durchmischt wird.

14. Verfahren nach einem der Ansprüche 10 bis 13, **dadurch gekennzeichnet, dass** eine anschließend an die im zweiten Reaktorgehäuseteil (5) angeordnete Auslassöffnung (11) angeordnete Austragsvorrichtung (19) von einer zweiten Antriebsvorrichtung (20) angetrieben wird, wobei die zweite Antriebsvorrichtung (20) unabhängig von der oder den ersten Antriebsvorrichtungen (18) des oder der Mischelemente (12) angetrieben wird.

15. Verfahren nach einem der Ansprüche 10 bis 14, **dadurch gekennzeichnet, dass** zuerst von zumindest einer Gewichtsermittlungsvorrichtung (21) ein erster Messwert vom Eigengewicht des Reaktors (2) ohne der Kunststoffschmelze ermittelt und an eine Steuervorrichtung übertragen und gegebenenfalls in dieser abgespeichert wird, anschließend die zu behandelnde Kunststoffschmelze dem Reaktor (2) zugeführt und bei einer Erreichen eines vordefinierten Füllstandes der Kunststoffschmelze und der damit verbundenen Höhe des Schmelzespiegels in den zweiten Kammerteilen (9) der zweiten Reaktorgehäuseteile (5) ein zweiter Messwert von der zumindest einen Gewichtsermittlungsvorrichtung (21) ermittelt und an die Steuervorrichtung übertragen und gegebenenfalls in dieser abgespeichert wird, dann von der Steuervorrichtung ein Differenzwert aus dem zweiten Messwert abzüglich des ersten Messwerts ermittelt wird und dass von der Steuervorrichtung in Abhängigkeit des aus den zweiten Reaktorgehäuseteilen (5) entnommenen Gewichts an behandelter Kunststoffschmelze das Gewicht an zugeführter, zu behandelnder Kunststoffschmelze in vorgegebenen Grenzen im Gleichgewicht bezüglich des zuvor ermittelten Differenzwertes gehalten wird.

16. Verfahren nach einem der Ansprüche 10 bis 15, **dadurch gekennzeichnet, dass** von einer Messvorrichtung ein Messwert der intrinsischen Viskosität der behandelten Kunststoffschmelze im Bereich der Auslassöffnung (11) oder einem unmittelbar daran anschließenden Austragsabschnitt der Kunststoffschmelze ermittelt wird.

## Claims

1. An installation (1) for treating a plastic melt, in particular a polycondensate melt, and setting the intrinsic viscosity thereof, having a reactor (2) which comprises a reactor housing (3), with at least one first reactor housing part (4) with an upper end region (6) and a lower end region (7), and a first chamber part (8) extending between the upper and the lower end region (6, 7), wherein the first chamber part (8) has a vertical height extent, and the reactor housing (3) has, in the region of the lower end region (7) of the at least one first reactor housing part (4), at least one second reactor housing part (5), with a second chamber part (9), directly adjoining said first reactor housing part (4), wherein the at least one second reactor housing part (5) comprises an approximately horizontally extending longitudinal extent with a first end region (15) and a second end region (16) arranged at a distance from said first end region (15), and the chamber parts (8, 9) are flow-connected to one another and formed to be sealed off with respect to the external surroundings, and in the region of the upper end region (6) of the at least one first reactor housing part (4) at least one feed line (10) for the plastic melt opens into the at least one first reactor housing part (4) at at least one inlet opening, and at least one outlet opening (11) for the plastic melt is arranged in the at least one second reactor housing part (5), and wherein the at least one outlet opening (11) for the plastic melt is arranged in the region of the second end region (16) of the at least one second reactor housing part (5), said second end region (16) being arranged at a distance from the at least one first reactor housing part (4), and the chamber parts (8, 9) of the first and second reactor housing parts (4, 5) that are flow-connected to one another are flow-connected to a negative pressure generator via at least one connection opening and at least one extraction line (14), and having at least one mixing element (12) which is arranged in the at least one second reactor housing part (5), said mixing element (12) being mounted in the at least one second reactor housing part (5) so as to be rotatable about an axis of rotation (13), wherein the reactor housing (3) comprises two first reactor housing parts (4) and two second reactor housing parts (5),
**characterized in that**
- the two horizontally arranged second reactor housing parts (5) are arranged so as to face one another on their second end regions (16) and are connected to form a unit on the second end regions (16),
- the at least one outlet opening (11) is arranged in a floor region of the second reactor housing parts (5), and
- the at least one mixing element (12) respectively extends over the longitudinal extent of the second chamber parts (9) between the first and second end regions (15, 16) of the second reactor housing parts (5) arranged at a distance from one another and is entirely arranged in each of the second chamber parts (9).

2. The installation (1) according to claim 1, **characterized in that** the first reactor housing parts (4) and/or the second reactor housing parts (5) are formed tubularly and **in that** the axis of rotation (13) of the mixing element (12) is arranged coaxially with respect to the tubularly formed second reactor housing part (5).

3. The installation (1) according to claim 2, **characterized in that** the mixing element (12) is arranged at a minimum distance of smaller than 1.0 mm from an inner wall (17) of the second reactor housing part (5) or that the mixing element (12) is arranged at a minimum distance of greater than 1.0 mm, in particular greater than 20 mm, from the inner wall (17) of the second reactor housing part.

4. The installation (1) according to one of claims 1 to 3, **characterized in that** in each of the second reactor housing parts (5) an independent mixing element (12) is provided and each of the mixing elements (12) is drive-connected to a separate, independent first drive device (18).

5. The installation (1) according to one of claims 1 to 3, **characterized in that** the mixing elements (12) arranged in the two second reactor housing parts (5) are connected to one another to form a connected component and the mixing elements (12) have a reversely directed incline.

6. The installation (1) according to one of claims 1 to 5, **characterized in that** the at least one outlet opening (11) in the second reactor housing part (5) is arranged at an angle of 30°, preferably of 90°, below in relation to a horizontal plane extending through a longitudinal axis of the second reactor housing part (5).

7. The installation (1) according to one of claims 1 to 6, **characterized in that** a discharge device (19) for the plastic melt is arranged adjoining the at least one outlet opening (11) in the second reactor housing part (5).

8. The installation (1) according to claim 7, **characterized in that** the discharge device (19) is drive-connected to a second drive device (20), wherein the second drive device (20) is driven independently of the first drive device(s) (18) of the mixing element(s) (12).

9. The installation (1) according to one of claims 1 to 8, **characterized in that** the reactor (2) is supported on a contact surface with the interposition of at least one weight-determining device (21) and **in that** the at least one weight-determining device (21) is formed by a load cell or a tension scale, wherein the at least one weight-determining device (21) has a communication connection to a controller.

10. A method for treating a plastic melt, in particular a polycondensate melt, and setting the intrinsic viscosity thereof, in which the plastic melt to be treated is fed to a reactor (2) which has a reactor housing (3), comprising at least one first and at least one second reactor housing part (4, 5), via at least one feed line (10) which opens into an upper end region (6) of the at least one first reactor housing part (4), the plastic melt subsequently passes through a first chamber part (8) which is enclosed by the at least one first reactor housing part (4) having a vertical height extent, the plastic melt is collected in a second chamber part (9) which adjoins a lower end region (7) of the at least one first reactor housing part (4) and which is enclosed by the at least one second reactor housing part (5), and, in the course of this, a melt bath with a melt surface is formed by the collected plastic melt in the at least one second chamber part (9), wherein the second chamber part (9) comprises an approximately horizontally extending longitudinal extent with a first end region (15) and a second end region (16) arranged at a distance from said first end region (15), and the two chamber parts (8, 9) are flow-connected to one another and sealed off with respect to the external surroundings, and are evacuated to a pressure of lower than 100 mbar with a negative pressure generator, the melt bath is moved and mixed in the at least one second reactor housing part (5) by a mixing element (12) mounted rotatably about an axis of rotation (13), and the treated plastic melt is extracted from the second chamber part (9) through at least one outlet opening (11) arranged in the region of the second end region (16) of the at least one second reactor housing part (5), said second end region (16) being arranged at a distance from the first reactor housing part (4), wherein the reactor housing (3) is formed of two first reactor housing parts (4) and two second reactor housing parts (5),
**characterized in that**
- the two horizontally arranged second reactor housing parts (5) face one another on their second end regions (16) and are connected to form a unit on the second end regions (16), and
- the extraction of the treated plastic melt from the second chamber parts (9) is performed below the melt surface at an angle of 30°, preferably 90°, with respect to a longitudinal axis of the second reactor housing part (5), such that the melt surface comprises a longitudinal extent approximately equal to that of the mixing elements (12) and thus the reduced pressure acts on the melt surface of the melt bath during mixing of the melting bath.

11. The method according to claim 10, **characterized in that** in each of the second reactor housing parts (5) an independent mixing element (12) is provided and each of the mixing elements (12) is driven by a separate, independent first drive device (18).

12. The method according to claim 10, **characterized in that** the mixing elements (12) arranged in the two second reactor housing parts (5) are connected to one another to form a connected component and the mixing elements (12) are formed with a reversely directed incline.

13. The method according to one of claims 10 to 12, **characterized in that** the plastic melt in each of the second chamber parts (9) of the second reactor housing parts (5) is constantly moved and mixed by the mixing element (12).

14. The method according to one of claims 10 to 13, **characterized in that** a discharge device (19) which is arranged so as to adjoin the outlet opening (11) arranged in the second reactor housing part (5) is driven by a second drive device (20), wherein the second drive device (20) is driven independently of the first drive device(s) (18) of the mixing element(s) (12).

15. The method according to one of claims 10 to 14, **characterized in that** first, a first measurement value of the weight of the reactor (2) without the plastic melt is determined by at least one weight-determining device (21) and is transmitted to a controller and stored therein if applicable, subsequently, the plastic melt to be treated is fed to the reactor (2) and upon reaching a predefined filling level of the plastics melt, and the associated altitude of the melt surface in the second chamber parts (9) of the second reactor housing parts (5), a second measurement value is determined by the at least one weight-determining device (21) and transmitted to the controller and stored therein if applicable, then, a differential value is determined from the second measurement value minus the first measurement value by the controller and **in that** depending on the weight of treated plastic melt extracted from the second reactor housing parts (5), the weight of fed plastic melt to be treated is, within predefined limits, kept in equilibrium with respect to the previously determined differential value by the controller.

16. The method according to one of claims 10 to 15, **characterized in that** a measurement value of the intrinsic viscosity of the treated plastics melt is determined by the controller in the region of the outlet opening (11) or in a discharge section, directly adjoining said region, of the plastic melt.

## Revendications

1. Installation (1) pour le traitement d'une coulée de matière plastique, plus particulièrement d'une coulée de polycondensat, et le réglage de sa viscosité intrinsèque, avec un réacteur (2) qui comprend un boîtier de réacteur (3) avec au moins une première partie de boîtier de réacteur (4) avec une zone d'extrémité supérieure (6) et une zone d'extrémité inférieure (7) et une première partie de chambre (8) s'étendant entre la zone d'extrémité supérieure et inférieure (6, 7), la première partie de chambre (8) présentant une extension en hauteur verticale et le boîtier de réacteur (3) comprenant, au niveau de la zone d'extrémité inférieure (7) de l'au moins une première partie de boîtier de réacteur (4), au moins une deuxième partie de boîtier de réacteur (5), avec une deuxième partie de chambre (9), raccordée immédiatement à celle-ci, l'au moins une partie de boîtier de réacteur (5) présentant une extension longitudinale orientée horizontalement avec une première zone d'extrémité (15) et une deuxième zone d'extrémité (16) disposée à distance de celle-ci et les parties de chambre (8, 9) étant reliées de manière à permettre un écoulement entre elles et étant conçues de manière étanche par rapport à l'environnement extérieur et, au niveau de la zone d'extrémité supérieure (6) de la première partie de boîtier de réacteur (4) et au niveau d'au moins une ouverture d'entrée, au moins une conduite d'alimentation (10) pour la coulée de matière plastique débouche dans l'au moins une première partie de boîtier de réacteur (4) et, dans l'au moins une deuxième partie de boîtier de réacteur (5), étant disposée au moins une ouverture de sortie (11) pour la coulée de matière plastique, et l'au moins une ouverture de sortie (11) pour la coulée de matière plastique étant disposée au niveau de la deuxième zone d'extrémité (16) de l'au moins une deuxième partie de boîtier de réacteur (5), disposée à distance de l'au moins une première partie de boîtier de réacteur (4), et les parties de chambre (8, 9) reliées entre elles en écoulement des première et deuxième parties de boîtier de réacteur (4, 5) étant reliées en écoulement, par l'intermédiaire d'au moins une ouverture de raccordement et d'au moins une conduite d'aspiration (14), avec un générateur de dépression et, avec au moins un élément de mélange (12) disposé dans la deuxième partie de boîtier de réacteur (5), cet élément de mélange (12) étant logé de manière rotative autour d'un axe de rotation (13) dans la deuxième partie de boîtier de réacteur (5), le boîtier de réacteur (3) comprenant deux premières parties de boîtier de réacteur (4) et deux deuxièmes parties de boîtier de réacteur (5),
**caractérisée en ce que**
- les deux deuxièmes parties de boîtier de réacteur (5), disposées horizontalement, sont disposées de façon à être orientées l'une vers l'autre au niveau de leurs deuxièmes zones d'extrémité (16) et sont reliées entre elles en une unité au niveau de leurs deuxièmes zones d'extrémité (16),
- l'au moins une ouverture de sortie (11) est disposé dans une zone de fond des deuxièmes parties de boîtier de réacteur (5) et
- l'au moins un élément de mélange (12) s'étend sur l'extension longitudinale des deuxièmes parties de chambre (9) entre les première et deuxième zones d'extrémité (15, 16), disposées à distance entre elles, des deuxièmes parties de boîtier de réacteur (5) et est disposé complètement dans chacune des deuxièmes parties de chambre (9).

2. Installation (1) selon la revendication 1, **caractérisée en ce que** les premières parties de boîtier de réacteur (4) et/ou les deuxièmes parties de boîtier de réacteur (5) présentent une forme tubulaire et **en ce que** l'axe de rotation (13) de l'élément de mélange (12) est disposé de manière coaxiale par rapport à la deuxième partie de boîtier de réacteur (5) de forme tubulaire.

3. Installation (1) selon la revendication 2, **caractérisée en ce que** l'élément de mélange (12) est disposé à une distance minimale inférieure à 1,0 mm d'une paroi interne (17) de la deuxième partie de boîtier de réacteur (5) ou l'élément de mélange (12) est disposé à une distance minimale supérieure à 1,0 mm, plus particulièrement supérieure à 20 mm, de la paroi interne (17) de la deuxième partie de boîtier de réacteur.

4. Installation (1) selon l'une des revendications 1 à 3, **caractérisée en ce que**, dans chacune des deux parties de boîtier de réacteur (5), est prévu un élément de mélange (12) indépendant et chacun des éléments de mélange (12) est relié en entraînement avec son propre premier dispositif d'entraînement (18) indépendant.

5. Installation (1) selon l'une des revendications 1 à 3, **caractérisée en ce que** les éléments de mélange (12) disposés dans les deux deuxièmes parties de boîtier de réacteur (5) sont reliés entre eux en un composant correspondant et les éléments de mélange (12) présentent des pas orientés à contre-sens.

6. Installation (1) selon l'une des revendications 1 à 5, **caractérisée en ce que** l'au moins une ouverture de sortie (11) est disposée dans la deuxième partie de boîtier de réacteur (5) avec un angle de 30°, de préférence de 90°, en dessous par rapport à un plan horizontal s'étendant à travers un axe longitudinal de la deuxième partie de boîtier de réacteur (5).

7. Installation (1) selon l'une des revendications 1 à 6, **caractérisée en ce que**, à la suite de l'au moins une ouverture de sortie (11) dans la deuxième partie de boîtier de réacteur (5), est disposé un dispositif d'évacuation (19) pour la coulée de matière plastique.

8. Installation (1) selon la revendication 7, **caractérisée en ce que** le dispositif d'évacuation (19) est relié en entraînement avec un deuxième dispositif d'entraînement (20), le deuxième dispositif d'entraînement (20) étant entraîné indépendamment du ou des premier(s) dispositif(s) d'entraînement (18) du ou des élément(s) de mélange (12).

9. Installation (1) selon l'une des revendications 1 à 8, **caractérisée en ce que** le réacteur (2) est appuyé contre une surface de contact, avec l'intercalage d'au moins un dispositif de détermination de poids (21) et **en ce que** l'au moins un dispositif de détermination de poids (21) est constitué d'une cellule de pesage ou d'une balance à suspension, l'au moins un dispositif de détermination de poids (21) étant relié en communication avec un dispositif de commande.

10. Procédé de traitement d'une coulée de matière plastique, plus particulièrement d'un polycondensat, et de réglage de sa viscosité intrinsèque, dans lequel la coulée de matière plastique à traiter est introduite dans un réacteur (2) avec un boîtier de réacteur (3), comprenant au moins une première et au moins une deuxième partie de boîtier de réacteur (4, 5), par l'intermédiaire d'au moins une conduite d'alimentation (10) débouchant dans une zone d'extrémité supérieure (6) de l'au moins une première partie de boîtier de réacteur (4), puis la coulée de matière plastique traverse une première partie de chambre (8) entourée par l'au moins une première partie de boîtier de réacteur (4), avec une extension en hauteur verticale, la coulée de matière plastique est collectée dans une deuxième partie de chambre (9) suivant une zone d'extrémité inférieure (7) de l'au moins une première partie de boîtier de réacteur (4) et entourée par l'au moins une deuxième partie de boîtier de réacteur (5) et la coulée de matière plastique collectée constitue alors, dans l'au moins une deuxième partie de chambre (9), un bain de coulée avec un niveau de coulée, la deuxième partie de chambre (9) présentant une extension longitudinale orientée approximativement horizontalement, avec une première zone d'extrémité (15) et une deuxième zone d'extrémité (16) disposée à distance de celle-ci et les deux parties de chambre (8, 9) étant reliées en écoulement entre elles et étant étanches par rapport à l'environnement extérieur et étant évacuées avec un générateur de dépression à une pression inférieure à 100 mbar, le bain de coulée est déplacé et mélangé dans l'au moins une deuxième partie de boîtier de réacteur (5) par un élément de mélange (12) logé de manière rotative autour d'un axe de rotation (13) et la coulée de matière plastique traitée est retirée hors de la deuxième partie de chambre (9) à travers au moins une ouverture de sortie (11) disposé au niveau de la deuxième zone d'extrémité (16), disposée à distance de la première partie de boîtier de réacteur (4), de l'au moins une deuxième partie de boîtier de réacteur (5), le boîtier de réacteur (3) étant constitué de deux première parties de boîtier de réacteur (4) et deux deuxièmes parties de boîtier de réacteur (5), **caractérisé en ce que**
- les deux deuxièmes parties de boîtier de réacteur (5) disposées horizontalement sont orientées l'une vers l'autre au niveau de leurs deuxièmes zones d'extrémité (16) et sont reliées entre elles en une unité au niveau des deuxièmes zones d'extrémité (16) et
- le retrait de la coulée de matière plastique traitée hors des deuxièmes parties de chambre (9) des deux deuxièmes parties de boîtier de réacteur (5) est effectuée à un angle de 30°, de préférence de 90°, par rapport à un axe longitudinal des deuxièmes parties de boîtier de réacteur (5) en dessous du niveau de coulée, de façon à ce que le niveau de coulée présente une extension longitudinale approximativement égale à celle des éléments de mélange (12) et à ce que la pression réduite agisse sur le niveau de coulée du bain de coulée pendant le mélange du bain de coulée.

11. Procédé selon la revendication 10, **caractérisé en ce que**, dans chacune des deuxièmes parties de boîtier de réacteur (5), est prévu un élément de mélange (12) indépendant et chacun des éléments de mélange (12) est entraîné par son propre premier dispositif d'entraînement (18) indépendant.

12. Procédé selon la revendication 10, **caractérisé en ce que** les éléments de mélange (12) disposé dans les deux deuxièmes parties de boîtier de réacteur (5) sont reliés entre eux en un composant correspondant et les éléments de mélange (12) sont réalisés avec des pas orientés à contre-sens.

13. Procédé selon l'une des revendications 10 à 12, **caractérisé en ce que** la coulée de matière plastique est constamment déplacée et mélangée par l'élément de mélange (12) dans chacune des deuxièmes parties de chambre (9) des deuxièmes parties de boîtier de réacteur (5).

14. Procédé selon l'une des revendications 10 à 13, **caractérisé en ce qu'**un dispositif d'évacuation (19), disposé à la suite de l'ouverture de sortie (11) disposée dans la deuxième partie de boîtier de réacteur (5), est entraîné par un deuxième dispositif d'entraînement (20), le deuxième dispositif d'entraînement (20) étant entraînée indépendamment du ou des premier(s) dispositifs) d'entraînement (18) du ou des élément(s) de mélange (12).

15. Procédé selon l'une des revendications 10 à 14, **caractérisé en ce qu'**au moins par au moins un dispositif de détermination de poids (21), une première valeur de mesure du poids propre du réacteur (2) sans la coulée de matière plastique est déterminée et transmise à un dispositif de commande et, le cas échéant, enregistrée dans celui-ci, puis la coulée de matière plastique à traiter est introduite dans le réacteur (2) et, lorsqu'un niveau de remplissage prédéfini de la coulée de matière plastique et la hauteur du niveau de coulée qui y est liée sont atteintes dans les deuxièmes parties de chambre (9) des deuxièmes parties de boîtier de réacteur (5), une deuxième valeur de mesure est déterminée par l'au moins un dispositif de détermination de poids (21) et transmise au dispositif de commande et, le cas échéant, enregistrée dans celui-ci, puis le dispositif de commande détermine une valeur de différence à partir de la deuxième valeur de mesure moins la première valeur de mesure et **en ce que** le dispositif de commande permet, en fonction du poids de coulée de matière plastique traitée retiré hors des deuxièmes parties de boîtier de réacteur (5), de maintenir le poids de coulée de matière plastique à traiter introduit dans des limites prédéterminées en équilibre par rapport à la valeur de différence déterminée auparavant.

16. Procédé selon l'une des revendications 10 à 15, **caractérisé en ce qu'**un dispositif de mesure détermine une valeur de mesure de la viscosité intrinsèque de la coulée de matière plastique traitée au niveau de l'ouverture de sortie (11) ou d'une portion d'évacuation suivante de la coulée de matière plastique.
